(19) Europäisches Patentamt / European Patent Office / Office européen des brevets

(11) **EP 1 719 235 B1**

(12) **EUROPEAN PATENT SPECIFICATION**

(45) Date of publication and mention
of the grant of the patent:
**27.09.2017 Bulletin 2017/39**

(51) Int Cl.:
*H02J 15/00* (2006.01)  *H02J 4/00* (2006.01)
*H01M 8/06* (2016.01)  *H01M 8/22* (2006.01)
*C01B 3/02* (2006.01)  *F17D 1/04* (2006.01)

(21) Application number: **04789715.2**

(22) Date of filing: **07.10.2004**

(86) International application number:
**PCT/CA2004/001806**

(87) International publication number:
**WO 2005/071815 (04.08.2005 Gazette 2005/31)**

(54) **AN ENERGY NETWORK USING ELECTROLYSERS AND FUEL CELLS**

ENERGIENETZWERK MIT ELEKTROLYSATOREN UND BRENNSTOFFZELLEN

RESEAU D'ENERGIE UTILISANT DES ELECTROLYSEURS ET DES PILES A COMBUSTIBLE

(84) Designated Contracting States:
**AT BE BG CH CY CZ DE DK EE ES FI FR GB GR
HU IE IT LI LU MC NL PL PT RO SE SI SK TR**

(30) Priority: **23.01.2004  CA 2455689
14.07.2004  US 890162**

(43) Date of publication of application:
**08.11.2006  Bulletin 2006/45**

(73) Proprietor: **STUART ENERGY SYSTEMS
CORPORATION
Mississauga,
Ontario L4W 4V1 (CA)**

(72) Inventor: **FAIRLIE, Matthew
RR4 Shelburne, Ontario L0N 1S8 (CA)**

(74) Representative: **Nederlandsch Octrooibureau
P.O. Box 29720
2502 LS The Hague (NL)**

(56) References cited:
WO-A1-00/69773  WO-A2-03/107508
CA-A1- 2 387 634  US-A- 3 932 735
US-A- 5 432 710  US-A- 5 621 654
US-A- 6 107 691  US-A1- 2002 025 457
US-B2- 6 512 966  US-B2- 6 670 721
US-B2- 6 673 479

- SENJYU T ET AL: "A hybrid power system with using alternative energy facilities in isolated island", IEEE/PES TRANSMISSION AND DISTRIBUTION CONFERENCE AND EXHIBITION 2002 : ASIA PACIFIC. YOKOHAMA, JAPAN, OCT. 6 - 10, 2002; [IEEE/PES TRANSMISSION AND DISTRIBUTION CONFERENCE AND EXPOSITION], NEW YORK, NY : IEEE, US, vol. 2, 6 October 2002 (2002-10-06), pages 954-959, XP010630441, DOI: 10.1109/TDC.2002.1177605 ISBN: 978-0-7803-7525-3
- MEHTA ET AL: "Status of EPRI's hydrogen program", INTERNATIONAL JOURNAL OF HYDROGEN ENERGY, ELSEVIER SCIENCE PUBLISHERS B.V., BARKING, GB, vol. 6, no. 6, 1 January 1981 (1981-01-01) , pages 625-629, XP025591490, ISSN: 0360-3199, DOI: 10.1016/0360-3199(81)90027-6 [retrieved on 1981-01-01]
- C E Grégoire ET AL: "Survey of the Economics of Hydrogen Technologies", , 30 September 1999 (1999-09-30), page page 29, XP055237760, Retrieved from the Internet: URL:http://www.nrel.gov/docs/fy99osti/27079.pdf [retrieved on 2015-12-21]
- ONEY F ET AL: "Evaluation of pipeline transportation of hydrogen and natural gas mixtures", INTERNATIONAL JOURNAL OF HYDROGEN ENERGY, ELSEVIER SCIENCE PUBLISHERS B.V., BARKING, GB, vol. 19, no. 10, 1 October 1994 (1994-10-01), pages 813-822, XP025640417, ISSN: 0360-3199, DOI: 10.1016/0360-3199(94)90198-8 [retrieved on 1994-10-01]

**(Cont. next page)**

- Dt.Bundestag: "Gesetz für den Vorrang erneuerbarer Energien (Erneuerbare-Energien-Gesetz EEG)", Bundesgesetzblatt Jg.2000 Teil I Nr.13, 31 March 2000 (2000-03-31), pages 305-309, XP055290227, Retrieved from the Internet: URL:http://www.bgbl.de/xaver/bgbl/media/68 8659B571F419E195D5BFB7A509BC82/bgbl100s 030 5_58303.pdf [retrieved on 2016-07-21]
- GONZALEZ A ET AL: "The role of hydrogen in high wind energy penetration electricity systems: The Irish case", RENEWABLE ENERGY, PERGAMON PRESS, OXFORD, GB, vol. 29, no. 4, 1 April 2003 (2003-04-01), pages 471-489, XP004474839, ISSN: 0960-1481, DOI: 10.1016/J.RENENE.2003.07.006

- JIN ZHONG ET AL: "Design of competitive markets for spinning reserve services", 2002 IEEE POWER ENGINEERING SOCIETY. SUMMER MEETING. CONFERENCE PROCEEDINGS. CHICAGO, IL, JULY 21 - 25, 2002; [IEEE POWER ENGINEERING SOCIETY], NEW YORK, NY : IEEE, US, 25 July 2002 (2002-07-25), pages 1627-1632vol.3, XP031212916, ISBN: 978-0-7803-7518-5

**Description**

**FIELD OF THE INVENTION**

The present invention is directed to the generation and distribution of energy and more particularly to energy networks.

**BACKGROUND OF THE INVENTION**

Hydrogen can be used as a chemical feed-stock and processing gas, or as an energy carrier for fueling vehicles or other energy applications. Hydrogen is most commonly produced from conversion of natural gas by steam methane reforming or by electrolysis of water. Comparing hydrogen as an energy carrier with hydrocarbon fuels, hydrogen is unique in dealing with emissions and most notably greenhouse gas emissions because hydrogen energy conversion has potentially no emissions other than water vapour.

However emissions that have global impact, such as $CO_2$, need to be measured over the entire energy cycle, which must include not only the hydrogen energy conversion process but also the process that produces the hydrogen. Looking at the main hydrogen production means, steam methane reforming generates significant quantities of $CO_2$ and, unless the emissions are captured and sequestered which is only practical in systems that are very large and where facilities to capture and sequester the gas are available, these gases are released to the environment. In the case of electrolysis, since the electrolysis process produces no environmental emissions per se and transmission of electricity results in little or no emissions, if the electricity is sourced from clean forms of power generation such as nuclear, wind or hydro, hydrogen production by electrolysis generates hydrogen with near zero emissions over the full energy cycle.

One of the most frequently cited impediments to the development of gaseous hydrogen vehicles is the lack of a fuel supply infrastructure. Because of the relatively low volume density of gaseous hydrogen it is not cost effective to handle gaseous hydrogen in the same way as liquid fuels using central production at a refinery and transporting fuel in fuel tankers. Also unlike natural gas which is delivered to the customer through a pipeline, there is no large-scale pipeline delivery infrastructure for hydrogen. Analysis of the problem has shown that in the near term, because of the relatively low number of vehicles and hence low market demand in any specific location, the initial infrastructure could build on the existing energy distribution systems, which deliver natural gas and electricity, using on-site hydrogen production processes to convert these energy streams to hydrogen. Using on-site production systems, a widely distributed network of fuel supply outlets, which are sized to meet relatively small demand on a geographical density basis, can be created. The proposed solution of using distributed on-site fuel production systems addresses the needs of a nascent hydrogen fuel market where it may take decades for the fleet of vehicles to be fully converted to hydrogen.

A hydrogen distribution system having a multiple number of fueling stations connected to one or more energy source(s) in a hydrogen network is disclosed in US Patent 6,745,105 (Fairlie et al). The fuel stations on the network act independently to supply local needs of hydrogen users but are controlled as a network to achieve collective objectives with respect to their operation, production schedule and interface to primary energy sources. A hydrogen network as a collective can be optimized to meet a variety of environmental and economic objectives.

Because the electrolysis process can be operated intermittently and can be modulated over a wide range of outputs, an electrolyser fuel station can be operated as a "responsive load" on the grid. It is also recognized that for hydrogen networks based on electrolysis, because hydrogen can be stored, for example as a compressed gas in a tank, a hydrogen network can become a secondary market for electricity providing "virtual electricity storage" or demand shifting, by decoupling the electrical energy demand for hydrogen production from when the hydrogen is used. The fueling stations in the hydrogen network can also incorporate hydrogen powered electricity generators such as fuel cells or hydrogen combustion systems which can use hydrogen made by the hydrogen network to regenerate electricity and/or thermal energy thereby acting as emergency power generating systems or as peak shaving electricity generators to reduce costs or emissions during peak demand periods.

Because the environmental benefits of hydrogen should be evaluated over the full fuel cycle, it is important to the value proposition of hydrogen fuels to be able to measure and control accurately the emissions created in the hydrogen production process. In most electricity market designs electricity is a commodity and it is often difficult to differentiate and assign particular sources of electricity generation to a particular electricity demand. Hence it is difficult to precisely define the emission characteristics of power used in a particular application. For electrolysers connected to the grid in a hydrogen network, the emissions created by hydrogen production are thus often taken to be the average or pool value of the generation mix on line or the marginal rate of emission from increasing power demand when hydrogen is produced.

At the same time there is recognition that, in the near term, reducing carbon dioxide and other green house gas emissions is the primary objective of hydrogen energy and so the electrolysis solution which offers nearly zero emission production of hydrogen is of particular interest. If the emissions from hydrogen production could be verified, a clean "emission-free" hydrogen could be designated by an "environmental label" and receive emission credits such as fuel tax rebates for avoiding the $CO_2$ emissions that would otherwise be generated by using other fuels.

Hydrogen energy systems have been demonstrated such as photo-voltaic (PV) hydrogen vehicle fueling stations (Xerox/Clean Air Now), which operate "off-grid", solely powered by renewable emission-free electricity generation, and hence demonstrate in conjunction with hydrogen fuel cell vehicles a virtually emission free or "zero emission" energy system. However PV power systems are expensive and occupy a lot of space and so other types of clean energy systems need to be considered including wind, hydro-electric, "clean coal" (scrubbed and $CO_2$ captured and sequestered) and nuclear. These power generation systems are only cost effective on a large scale when operated like a commercial power plant and cannot be scaled down to the size determined to be appropriate for on-site hydrogen production in a hydrogen network (which constitutes a load of typically less than 20 MW per fuel outlet).

Optimization of energy systems is addressed in the following Patents and applications: US Patent 5432710 (Ishimaru), US Patent 6512966 (Lof), International Patent Application WO 01/28017 (Routtenberg), US Patent 6673479 (McArthur), US Patent Application 2003/0009265 (Edwin), US Patent 6021402 (Takriti), WO03/107508 (Zees AS) and WOOO/69773 (Stuart Energy Sys Corp.) and also in an article by MEHTA ET AL: "Status of EPRI's hydrogen program", INTERNATIONAL JOURNAL OF HYDROGEN ENERGY,ELSEVIER SCIENCE PUBLISHERS B.V., BARKING, GB, vol. 6, no. 6, 1 January 1981 (1981-01-01), pages 625-629.

None of these patents adequately address the need for a system controlling the delivery of energy to a geographically distributed network of hydrogen production units in an optimized way and in a way such that environmental attributes of the hydrogen production process can be audited.

## SUMMARY OF THE INVENTION

It is therefore an object of the invention to provide an energy network that obviates or mitigates at least one of the disadvantages of the above-identified prior art. According to the invention there is provided an energy network as defined in claim 1 and a method as defined in claim 18.

The network can further comprise at least one generating station having a variable availability such that the controller is operable to adjust availability from the generating station to match the demand.

The network can further comprise a data network connected to the controller, the network providing additional information about the demand and the availability to the controller and which is used by the controller to determine whether to adjust at least one of the demand and the availability to achieve a match there between. The match can be based at least in part on determining which of a plurality of adjustments produces a reduced amount of harmful emissions in comparison to another adjustment. The match can also be based at least in part on determining which of a plurality of adjustments has a least amount of financial cost in the marginal cost required to produce electricity.

In the invention, the variable power loads include at least one electrolyser for converting electricity into hydrogen.

The energy network may produce hydrogen that has a specific emission profile, so that the hydrogen produced by electrolysis has a measurable emission characteristic that can be compared with emissions from other hydrogen production processes such as hydrogen produced by steam methane reforming (SMR). This is achieved by assigning specific energy flows to the hydrogen production systems and auditing the energy flows to ensure that they are used to produce fuel having the desired environmental values.

By assigning specific generation systems, which may be referred to herein as "captive power producers", to produce electricity for the hydrogen network there is an opportunity to optimize the operation of these systems on a large scale, where energy flows for instance exceed one Megawatt, in the context of the public electricity grid and electricity market where energy can be bought and sold into a general electricity market taking advantage that hydrogen can be stored and electricity cannot.

An aspect of the invention provides a complete energy network encompassing electricity and hydrogen fuel production, that can serve a two-tier market: a) a prime market where electricity demands are served and b) a secondary market where hydrogen fuel is produced.

An aspect of the invention provides a distributed network of electrolysis systems as a means of providing hydrogen production, providing a method of hydrogen delivery that is cleaner than at least some other systems. Since the electrolysis process produces little or no harmful emissions, (i.e. the by-products are oxygen and water vapour), and since the transmission of electricity to the electrolyser produces no emissions such as produced by trucking tankers of fuel (either directly or indirectly through increased traffic congestion), the harmful emissions generated by the electrolysis process are entirely dependant on the form of primary electricity generation.

However in many electricity markets clean forms of power generation are not differentiated from other forms of power generation and so clean hydrogen production cannot be demonstrated as the emission rate is taken to be either the average emission rate of all electricity generators producing power on the grid or the marginal emission rate of the generating system operating when electrolysers are connected.

An aspect of the invention provides a single point hydrogen network controller to schedule and control operation of the different resources connected to the network. The operation of the energy network created by the hydrogen supply systems and captive electrical generators can be optimized (and/or adjusted as desired) by controlling electricity flows either to the electrolysers or to the general electricity market connected to the grid such that the contributions from minimizing the aggregated hydrogen production costs and maximizing the aggregated value of power supplied from captive power producers are maximized, subject to the production constraints of ensuring adequate hydrogen supply at each fuel location and achieving a pre-defined level of environmental emissions for the hydrogen produced. The optimization produces a schedule based on optimizing the following Objective Function by maximizing the value of the function over the time horizon control actions can be taken:

$$V(t) = \sum_{k=1}^{K} (RateOfFuelProduction_k(t) \times FuelValue_k(t)) +$$

$$\sum_{j=1}^{J} (AvailablePowerFromCaptiveSources_j(t) \times GridElectricityValue_j(t))$$

where $K$ = number of electrolysers;
$J$ = number of captive power generators; and
$t$ = time.

**Eq.1**

When defining the functions in the Objective Function, the RateOfFuel Production function is determined by the available energy, from "captive" and grid sources; and the fuel demand at each location on the network (Note that the function "RateOfFuelProduction" is expressed as four words, without spaces in between each word. This notation is followed for other functions expressed herein.). The fuel demand depends on the customer demand forecast over the schedule period and the amount of fuel inventory available in storage at the start of the schedule period. The fuel demand forecast could be determined by modeling customer demand or through a direct measurement of hydrogen in customer storage systems.

Knowledge of the specific emission profile from electricity generation is desirable so that the fuel production can be labeled according to an environmental impact specification and so if power is purchased from the grid to supplement power from captive sources, data is needed from measurement of the average emission rate, the marginal emission rate or a rate which is measurable and reasonably assigns emissions given the electricity market design or customer choices on the grid.

The single point hydrogen network controller schedules the operation of the electrolysers on a "day forward" basis or in a schedule period co-incident to the scheduling of the general power grid so that power transactions with the grid can be scheduled. During the operating period of the schedule, the controller would monitor operation of the different sites and power availability to make supply corrections to balance energy flows as needed.

Not only can electricity demand for the network collective be tailored to supply but so can the production rate of individual electrolysers and so the Hydrogen Network controller can set a production rate and hence schedule the power consumption of each unit.

And so the controller would determine an optimal (or otherwise desirable) hydrogen production schedule based on an electric power demand of the electrolysers, K in number, on the Hydrogen Network:

$$TotalElectricPowerDemandOfElectrolysers(t) =$$

$$\sum_{k=1}^{K} (RateOfFuelProduction_k(t) \times$$

$$SpecificEnergyConsumptionForHydrogenProductionAtStation_k(t))$$

**Eq.2**

where in the Objective Function (Eq.1):

$$\sum_{k=1}^{K} RateOfFuelProduction_k(t) = TotalRateOfHydrogenProduction(t)$$

**Eq.3**

where $K$ = number of electrolysers; and
$t$ = time.

which is in balance with power supplied by captive power sources, J in number, and available power from the grid:

$$TotalElectricPowerDemandOfElectrolysers(t) =$$

$$\sum_{j=1}^{J} PowerForElectrolysisFromCapthivePowerSource_j (t) +$$

$$PowerForElectrolysisFromGrid(t)$$

where $J$ = number of captive generators; and
$t$ = time.

$$Eq.4$$

such that over the schedule period the following requirements are met, acting as constraints to RateOfFuelProduction and the optimization process:

$$FuelAvailableInStation_k (t + \Delta t) = FuelInventory_k (t) + (RateOfFuelProduction_k (t) -$$

$$RateOfFuelConsumption_k (t)) \times \Delta t$$

$$Eq.5(a)$$

$$\geq CustomerDemandForFuelAtStation_k (t + \Delta t,$$

$$FuelSellingPrice)$$

$$Eq.5(b)$$

$$\leq MaximumStorageCapacityOfStation_k$$

$$Eq.5(c)$$

where $t$ = time.

$$Eq.5$$

and the emissions specification as proscribed by the environmental label are met.

Where in Eq.5(a) FuelInventory$_k$ is the measured amount of fuel "on-hand" such as measured by pressure, temperature, volume in compressed storage tanks or such as measured by pressure, temperature, volume, mass of metal hydride in metal hydride hydrogen gas storage, where in Eq.5(b) CustomerDemandForFuelAtStation$_k$, being a probabilistic function, is set to a defined confidence level of meeting the supply constraint. RateOfFuel Consumption$_k$ is determined by the CustomerDemandForFuelAtStation$_k$ forecast and RateOfFuelProduction$_k$ in Eq 5(a) would be adjusted to satisfy demand constraint at all times over schedule period. The full hydrogen storage condition, Eq.5(c), is a hard limit constraint, however the station would be designed such that at most times it has sufficient storage to meet demand and provide a margin for storage capacity for making real time adjustments to energy flows when the Network has an over supply of power.

The emission specification could define limits for a number of different emissions including so called criteria pollutants which affect local air quality at the location of the power plant such as nitrous oxides, carbon monoxide, sulphur compounds and hydrocarbon emissions as well as emissions affecting the global environment such as carbon dioxide and other green house gases. The environmental specification may work on an instantaneous value, such as in the case of criteria pollutants where air quality emergency procedures are triggered by achieving certain levels, or emission standards could be proscribed by time average values measured over a specified period of time, such, as required for green house gas reporting in some jurisdictions. A key characteristic of the energy network is that emissions for the whole fuel cycle including the end use applications such as hydrogen fuel cell vehicles, can be measured and controlled very precisely since they occur only at the power station. Because power plants already have to comply with certain reporting requirements the emission monitoring is often in place.

Based on specific emission profiles, hydrogen production at each location on the network can be scheduled to take advantage of the lowest cost combination of captive power and grid power, which meets hydrogen production and emission requirements. The emission profile is dependant on the emissions of specific generating processes, which also complies with local emission standards. In the case of captive power generation the emission profile is well defined, reporting directly to the controller, and can be monitored. In the case of power purchased from the grid, and depending on the market design under which the grid operates, either an average emission value calculated for all power generators on-line or the marginal emission rate for increase in power demand can be used.

The emission constraints on the optimization of hydrogen production in the network can be written as:

For an emission that is not to exceed defined levels,

$$\left( \sum_{j=1}^{J} (PowerForElectrolysisFromCaptiveSource_j(t) \times EmissionRateForEmission_l ForSource_j) \right.$$
$$\left. + \left( PowerForElectrolysisFromGrid(t) \times EmissionRateForEmission_l ForGrid \right) \right) \,/\,$$
$$\left( TotalHydrogenProductionRateOfNetwork(t) \right)$$
$$\leq ProscribedEmissionLevelForEmission_l PerUnitOfHydrogen(t, LocationOfEmission)$$

where $J$ = number of captive power generators; and
$t$ = time.

$$\text{Eq.6}$$

where the Emission$_l$ specification may depend on time and geographical location, and for Emission$_m$ that must not exceed a pre-defined time average:

$$\left[ (1/T) \int_0^T \left( \sum_{j=1}^{J} (PowerForElectrolysisFromCaptiveSource_j(t) \times \right. \right.$$
$$EmissionRateForEmission_m ForSource_j) + \left( PowerForElectrolysisFromGrid(t) \times \right.$$
$$\left. \left. EmissionRateForEmission_m ForGrid \right) \right) dt \right] \,/\,$$
$$\left[ (1/T) \int_0^T TotalHydrogenProductionRateOfNetwork(t)\, dt \right]$$
$$\leq ProscribedTimeAvgEmissionLevelForEmission_m PerUnitOfHydrogenProduced$$

where $J$ = number of captive power generators; and
$T$ = time interval over which the time average is to be taken.

$$\text{Eq.7}$$

In markets where emission credits are transferable from power production to fuel production, the emission reductions from captive power sources providing power to grid for which the Hydrogen Network owns environmental attributes can be applied to hydrogen fuel production. In this case Eq.6-7 would be modified to include emission credits from power generation that could be applied against emissions generated when fuel is produced.

The FuelValue function in the Objective Function is the selling price of hydrogen fuel per unit of fuel produced and charged to customers, less the cost of hydrogen production per unit of fuel produced which depends on cost of available power to the Hydrogen Network and the other variable process costs in operating the particular electrolysis fueling system k (ie. cost of water, operating maintenance etc.):

$$FuelValue_k(t) = FuelSellingPrice(t) - FuelCost(CostOfPower(t),$$
$$FuelStationVariableProcessCosts_k(t))$$
$$= GrossMarginForHydrogenProductionAtStation_k(t)$$

where $t$ = time.

**Eq.8**

The CostOfPower function is the cost of power produced by captive sources, which depends on variable costs such as the fuel cost of the generator and charges for grid transmission, plus the cost of power that is purchased from the grid:

$$CostOfPower(t) = \left[\sum\nolimits_{j=1}^{J} CostOfCaptivePowerSource_j(t, VarableGeneratingCosts,\right.$$
$$TransmissionCharges) + PurchaseCostOfGridPower(t)\Big] /$$
$$\Big[TotalCaptivePower(t) + AmountOfGridPowerPurchased(t)\Big]$$

where

$$TotalCaptivePower(t) = \sum\nolimits_{j=1}^{J} PowerFromCaptivePowerSource_j(t) ;$$

$J$ = number of captive power generators; and
$t$ = time.

**Eq.9**

Because hydrogen can be stored at the sites, where it is being produced and dispensed to customers, the hydrogen production cost can be minimized by scheduling hydrogen production at times, such as low electricity demand periods on the grid, when grid power costs and grid power generation emissions are lowest.

Within some jurisdictions, the selling price of hydrogen from the Hydrogen Network is another variable, which could be changed to encourage fuel purchases to balance energy supply and demand.

$$FuelSellingPrice(t) = Price(CustomerDemand(t), SupplyCapabilityAtTimeOfWeek,$$
$$CompetitionPricing)$$

where $t$ = time.

**Eq.11**

For example the period of lowest electricity demand and as a consequence lowest cost and lowest stress on supply system is typically on weekends and holidays. As a consequence because this a favoured time to produce hydrogen, the price of hydrogen could be lowered to promote consumption during these periods. In this way through the FuelValue function and meeting constraint Eq. 5, fuel price can enter into the system optimization to balance energy flows in the Network, and would be part of the schedule information sent to the fuel station network.

The AvailablePowerFromCaptiveSources function in the Objective Function is the total power available from captive sources less the captive power that is committed to the electrolysers for hydrogen production and is the power that could be sold by the Hydrogen Network to the Public Electricity Grid:

$$AvailablePowerFromCaptiveSources(t) = TotalCaptivePower(t) -$$
$$\sum_{j=1}^{J} PowerForElectrolysisFromCaptivePowerSource_j(t)$$

**Eq.12**

where

$$TotalCaptivePower(t) = \sum_{j=1}^{J} PowerFromCaptivePowerSource_j(t) ;$$

**Eq.13**

$J$ = number of captive power generators; and

$t$ = time.

The GridElectricityValue function in the Objective Function depends on the selling price for captive power in the electricity market of the electrical grid, which can also include environmental credits from supply of captive power.

$$GridElectricityValue(t) = CaptivePowerSellingPrice(t,GreenAttributes(t)) -$$
$$CostOfCaptivePower(t)$$
$$= GrossMarginForCaptivePowerSaleToGrid(t)$$

**Eq.14**

where

$$CostOfCaptivePower(t) = \sum_{j=1}^{J} CostOfCaptivePowerSource_j(t) \Big/ TotalCaptivePower(t) ;$$

**Eq.15**

$J$ = number of captive power generators; and
$t$ = time.

In some energy markets these credits, called "green tags", may be transferable between the stationary power market and the transportation (hydrogen fueling) market, and hence could be transferred to hydrogen production and used to meet emission constraints in Eq.6-7. In some power markets the emission credit is dependent on the power it is displacing, or the marginal emission rate. Depending on the electricity market design, the ability to sell power into peak demand electricity markets can contribute significantly to the energy network, since it is competing with peak power generators which are more expensive, because of poor utilization, and which often have higher specific emission rates.

The optimization can be performed over a specific time interval so as to determine an operating schedule and fuel pricing and so as to optimize operating cost subject to constraints of maintaining fuel supply reliability, insuring sufficient fuel is available at each station to meet customer demand and meeting the emission objective that the hydrogen produced has specific and verifiable emission characteristic over the whole production cycle on an instantaneous or time average basis as proscribed by the emission standard.

The same scheduling algorithms can be used in longer running hypothetical demand scenarios to determine the mathematically optimized number, size and location of fueling outlets needed to satisfy demand in a region and the necessary commitment to invest in captive electricity generation as well as the type of generation as it relates to the specific emission profile required to insure specifications of the environmental label are met.

The fueling of hydrogen vehicles presents a potentially large load on the grid. Projections for North American markets have shown that electrical power required to fuel a fleet of fuel cell vehicles equivalent to the gasoline powered vehicles on the road today would double the amount of energy handled by the grid, and so the power transfers of the Hydrogen Network could have a huge impact on the grid. Because the electrolysers can act as "responsive loads" reacting very quickly and their production rate, and hence power range, can be varied over a wide range, an energy network under control of a network controller as taught herein can provide ancillary services to the electricity grid such as providing operating reserves and even generator control services to insure electricity network stability. These ancillary services if contracted and paid for by the grid operator would be provided at the request of the Public Grid Operator and would act as conditional constraints on the system.

Typically the request for Grid Power Supply Change would be in the form of a directive to increase or lower fuel production at specific hydrogen generators or groups of generators over time t to t +$\Delta$t depending on geographical location hence through:

$$GridPowerSupplyChangeAtStation_k\,(t+\Delta t) =$$
$$(RateOfFuelProduction_k\,(t+\Delta t) - RateOfFuelProduction_k\,(t)) \times$$
$$SpecificPowerConsumptionForHydrogenProductionAtStation_k\,(t+\Delta t)$$

where $t$ = time.

$$\text{Eq.16}$$

where the new RateOfFuelProduction at time $t+\Delta t$ is now fixed for the period the request is in effect. Applying this constraint may require other resources on the network to adjust schedule to meet production constraints.

For example during the daily ramp up and ramp down in electricity demand, the Hydrogen Network can disengage and engage electrolysers either making power available to the grid from captive generation or reducing the electricity supply by absorbing power from the grid. Because of the responsiveness of these systems the Hydrogen Network can earn additional revenue in these periods from the Public Electricity Grid operator, and because of the distributed nature of hydrogen production units in the Hydrogen Network, they can provide ancillary services to individual generators as well as transmission lines addressing transmission capacity constraints. The services provided by the electrolysers as "responsive loads" in the Hydrogen Network can be supplemented by hydrogen powered electricity re-generation, which could be available at the hydrogen fueling stations and which also could be under the control of the Hydrogen Network Controller.

In some cases the request may not be load specific. In this case the provision of these services would be guided by the same optimization in Eq. 1-15 in terms of calculating value for captive energy flows however in this case if contracted to provide services in terms of shedding load or increasing loads the Network must react to the grid operator request to meet these requirement thus becoming an instantaneous operating constraint on the system; modifying Eq.4.

$$GridPowerSupplyChangeAtStation_k\,(t+\Delta t) =$$
$$\left\{ \sum_{j=1}^{J} (PowerForElectrlysisFromCaptivePowerSource_j\,(t+\Delta t)) + \right.$$
$$\left. PowerForElectrolysisFromGrid(t+\Delta t) \right\} -$$
$$\left\{ \sum_{j=1}^{J} (PowerForElectolysisFromCaptivePowerSource_j\,(t)) + \right.$$
$$\left. PowerForElectrolysisFromGrid(t) \right\}$$

where $J$ = number of captive power generators; and
$t$ = time.

$$\text{Eq. 17}$$

For example if the Hydrogen Network is contracted to provide operating reserves and the grid operator requests a Grid Power Supply Change but not from specific loads then the Hydrogen Network Controller would increase CaptivePowerSellingPrice in Eq. 14 reducing fuel production in Eq. 1 until sufficient power is made available to make up the power which the Network has been contracted to supply. If on the other hand the Grid operator requests that the Hydrogen Network absorb a power supply surge, the Hydrogen Network Controller responds by reducing the value of CostOfGridPower in Eq. 9 increasing fuel production in Eq. 1.

In the case of the hydrogen network providing ancillary services, the operating schedule would be conditional on demands from the grid operator and so contingencies in terms of storage capacity and the amount of fuel stored to meet customer demand in Eq. 5 and emissions in Eq. 6-7 would be needed to ensure the Network operates within these constraints.

Under highly constrained market conditions, hydrogen fuelled power regeneration or back up power units could play the role of captive power sources, in cases such as providing back up power locally to grid under emergency conditions or if there is a demand spike in the electricity market. In this case the regenerative systems act as captive power sources, which are run when the CaptivePowerSellingPrice exceeds the variable cost of regenerating power (Eq.9), based on, fuel cost = selling price of hydrogen, (Eq.11) and hence, under these conditions, when operating the unit is profitable. This may occur even while hydrogen is being produced on the Network. For example, when power demand on the grid exceeds available supply but one or more fueling stations on the Network have insufficient inventory to meet demand (Eq.5), and so must produce fuel. In this case a virtual transfer of hydrogen fuel from one station to another can be transacted through the electrical grid.

An energy network in accordance with the invention could be a wholesale buyer and seller of electricity and would operate as a hydrogen-electricity utility having captive sources of energy with defined emission characteristics which it controls either through bi-lateral contracts with the electricity generators or which it owns out-right. In this way the energy network owns the environmental attributes of specific power sources generating electricity in a specified period. Because the network-wide hydrogen production requirements are significant, and given that hydrogen is being used to fuel a large fleet of hydrogen vehicles, the energy transfers into and out of the general electricity grid will have a significant impact on energy balances in the public electricity supply.

The optimization of the resources in the energy network according to methods proscribed can also impact the design and layout of the physical resources particularly through a desire to minimize and/or reduce transmission charges and maximize and/or increase effectiveness of power regeneration systems. Generally speaking the fueling stations constitute a distributed load which will be located in the same locations as general electrical demand and so, as it is unlikely that the power demand of fuel stations will exceed transmission capacity at a given location if the fuel stations operate in periods of low electricity demand, no special transmission allowances or arrangements with the grid will be needed beyond those already in place. Also in designing the network there is an inherent trade-off between production capability and storage.

Based on the system characteristics however, the energy network designer can further optimize the design of the network based on following factors, which are a consequence of the energy network and optimization:

Locating the hydrogen generation at points on the electricity grid or network to relieve periods of excess supply over demand, or instability where a renewable energy source is connected and making available a hydrogen application that can absorb the hydrogen by injection of hydrogen in a natural gas pipeline;

Locating hydrogen generation and/or hydrogen storage and regeneration at points on the grid or network to relieve periods of excess demand for fuel, power and/or heat;

Locating hydrogen generation and/or hydrogen storage at points on the grid where the capacity of the grid itself is constrained relative to the available supply or demand for power;

Locating hydrogen power regeneration at locations to distribute operating reserves and improve system reliability to avoid need for committing larger units of generation;

Providing hydrogen fuel from the distributed network of hydrogen energy storage devices as stores become depleted or additional demand is expected; and

Providing a supplemental load to permit base load plants to operate at their optimum efficiency and lowest emissions during periods of low demand.

The network operator could also work closely with the other power generators on the public grid to make power purchases bilaterally to reduce emissions through demand management of specific generators such as natural gas fired generation where a significant drop in efficiency occurs when power levels are reduced and hence a significant increase occurs in specific emissions (emission gm per kWh). By increasing loads through hydrogen production the generator can be more efficient and hence produces lower specific emissions. In this way the network can also act to improve the efficiency of the public grid.

These actions could be formally contracted by selling ancillary services to the grid. Because the network can adjust energy flows between captive power plants and hydrogen production in a very precise fashion and on a "real-time" basis the system can provide short-term operating reserves to the grid and even "spinning reserves" by making a certain proportion of the demand for fuel production a "responsive" load. In this way, in the event of outage of a generator or transmission line and the network is contracted to provide operating reserves, the network controller would be notified and would turn down the rate of hydrogen production to make power available as required. Similarly in dynamic control, when load is picking up at the beginning of high demand periods or during periods when load is dropping off, the network can operate as a variable power generator to facilitate the ramp up of power plants. For some forms of generation that are currently used, such as coal powered generators, this will reduce start up times and increase the efficiency of operation, resulting in lower specific emissions. Where the electrical load is large enough, the network could be used to dynamically adjust load in the electrical network to improve efficiency and reduce cost through potentially maintaining a higher level of control than otherwise available by adjusting output of conventional power generators. The tighter control of the grid will result in efficiency improvement benefits which will accrue to the network and which also lower specific emission rates for the grid. These actions could be enhanced by regenerative systems that can be part of the network through "hydrogen energy stations" which incorporate power regeneration from hydrogen fuel with hydrogen production.

The list of ancillary services provided by the Hydrogen Network could include: "spinning" type reserves (<1 minute dispatch time), operating reserves, emission reductions (i.e. air quality emergency) and to some degree generator control as well as relieving local grid congestion.

The provision of ancillary services could contribute significantly to the value of the Hydrogen Network. The ancillary services themselves would be service requests from the grid operator which having been previously contracted to the grid would act as constraints in the optimization in Eq.1

An ancillary service request would act like a higher level or "overriding" constraint on the Network optimization constraint either through Eq.16 specifying a certain load be increased or shed in the Hydrogen Network or in the case of a non-specific change in power level through optimization of the resources subject to changing power available to grid.

The impact on design of the network so that the network can provide ancillary services, would be an increase in storage capability in the system and a general increase in inventory to account for conditional constraints and insure fuel supply reliability.

## BRIEF DESCRIPTION OF THE DRAWINGS

Embodiments of the present invention will now be explained, by way of example only, with reference to the attached figures in which:

Figure 1 is a schematic representation of an energy network in accordance with an embodiment of the present invention;

Figure 2 is a graph of electricity demand from conventional loads in the network;

Figure 3 is a graph of output power available from certain power stations in the network;

Figure 4 is a flowchart showing a method of operating an energy network in accordance with another embodiment of the invention;

Figure 5 is a flowchart showing a set of sub-steps that can be used to perform one of the steps in the method of Figure 4;

Figure 6 is an energy network in accordance with another embodiment of the invention; and,

Figure 7 is an energy network in accordance with another embodiment of the invention.

## DETAILED DESCRIPTION OF THE INVENTION

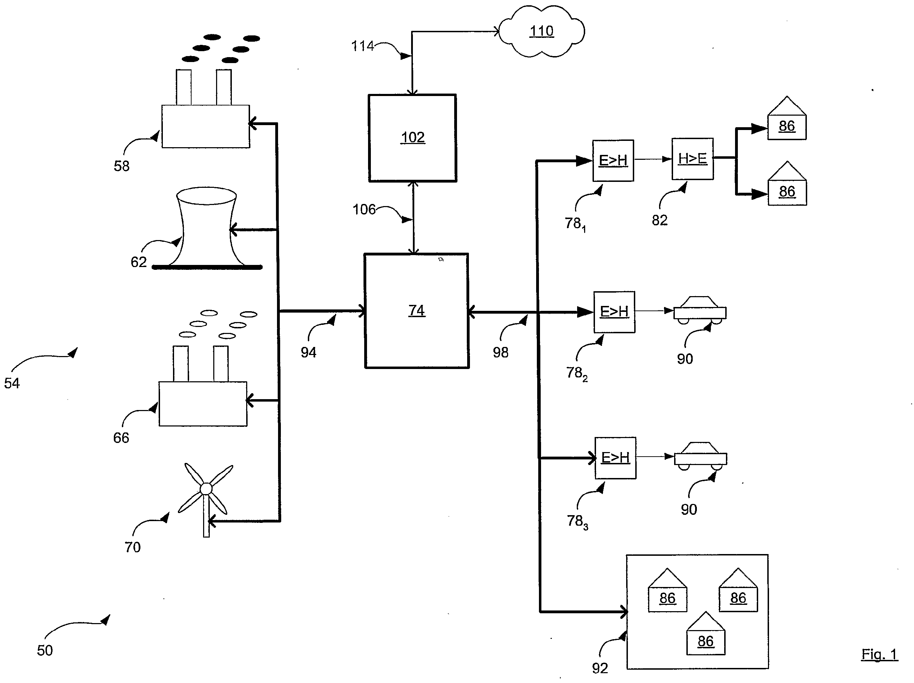

Referring now to Figure 1, an energy network is indicated generally at 50. Network 50 includes a plurality of electrical generating stations 54. In a present embodiment, electrical generating stations include a coal power plant 58, a nuclear power plant 62, a natural gas power plant 66, and a wind-farm 70. As will be discussed in greater detail below, each electrical generating station 54 has a profile relating to the amount of energy it can generate, and another profile relating to the environmental pollutants associated with that energy generation.

Network 50 also includes a power grid 74, which is substantially the same as any conventional electrical power distribution grid, including transmission lines, power stations, transformers, etc. as is currently known or may become known.

Network 50 also includes a plurality of electrolysers 78, that are connected to grid 74, and which are operable to convert electricity from grid 74 into hydrogen, and store that hydrogen locally. The configuration and type of electrolyser is not particularly limited, and can be any type of electrolyser that are currently known or may become known. Electrolysers 78 thus appear as an electrical demand to grid 74 when they are activated to convert electricity from grid 74 into hydrogen.

(As used herein the term, electrolyser means any system that includes an electrolytic hydrogen generator and/or other means to generate hydrogen from electricity and/or other equipment and/or associated equipment to render such a system operable to convert electricity into hydrogen and/or store hydrogen. Thus, such a system can also comprise gauges, storage tanks, water sources, pumps, dispensing equipment, etc. as the context of the particular embodiment being described may require to provide the function described in association with that electrolyser, as will be appreciated by those of skill in the art who are implementing such embodiments or other features of the invention.)

In a present embodiment, three electrolysers 78 are included in system 50. A first electrolyser $78_1$ supplies a fuel cell 82, which is operable to convert hydrogen received from first electrolyser $78_1$ into electricity for use by a plurality of consumers 86.

A second and third electrolyser, indicated at $78_2$ and $78_3$ respectively, are also included in network 50. Electrolyser $78_2$ and $78_3$ are essentially hydrogen filling stations operable to a) generate hydrogen from electricity b) store that hydrogen and c) supply hydrogen to hydrogen-powered vehicles ("HPV") 90 that periodically stop at electrolysers $78_2$ and $78_3$ in order to obtain hydrogen fuel. While not included in the present embodiment, it is to be understood that other hydrogen applications are within the scope of the invention, in addition to the supply of HPVs, for example, industrial hydrogen.

Network 50 also includes a plurality of conventional consumer loads 92 as are currently found on prior art electricity grids, such as residences, factories, office towers, etc.

Of particular note, network 50 includes a first set of transmission lines 94 that connect stations 54 to grid 74, that include physical cabling to allow power to be delivered from stations 54 to grid 74. By the same token, transmission lines 94 also additional data cabling to allow feedback from grid 74 to those stations 54 about demand in network 50, and also to include specific instructions from grid 74 to increase or decrease output, as appropriate or possible depending on the type of station 54.

Thus, network 50 also includes a second set of transmission lines 98 that connect grid 74 to electrolysers 78, that include physical cabling to allow power to be delivered from grid 74 to electrolysers 78. By the same token, transmission lines 98 also include additional data cabling to allow feedback from electrolysers 78 to grid 75 about demand and overall levels of reserve hydrogen stored at those electrolysers 78.

Network 102 also includes a controller 102 that is connected to grid 74, via data cabling 106. Through data cabling 106, controller 102 is operable to receive data from the data cabling associated with transmission lines 94 and 98 and thereby maintain awareness of outputs being generated by stations 54, as well as demands experienced by electrolysers 78. By the same token, controller 102 is operable to issue instructions to stations 54 and electrolysers 78 to vary supply and/or demand, respectively, as appropriate and/or within the inherent limitations of stations 54 and electrolysers 78. Further details about controller 102 will be provided below.

Network 50 also includes a data network 110, such as the Internet, that is connected to controller 102, through which various energy market information is available, and through which controller 102 can update the energy market information posted on data network 110 and thereby notify other entities connected to network 110 about the status of energy network 50. The details of data network 110 and such energy market information will be discussed in greater detail below. Controller 102 connects to data network 110 via any suitable backhaul 114, such as a T1, T3, or the like.

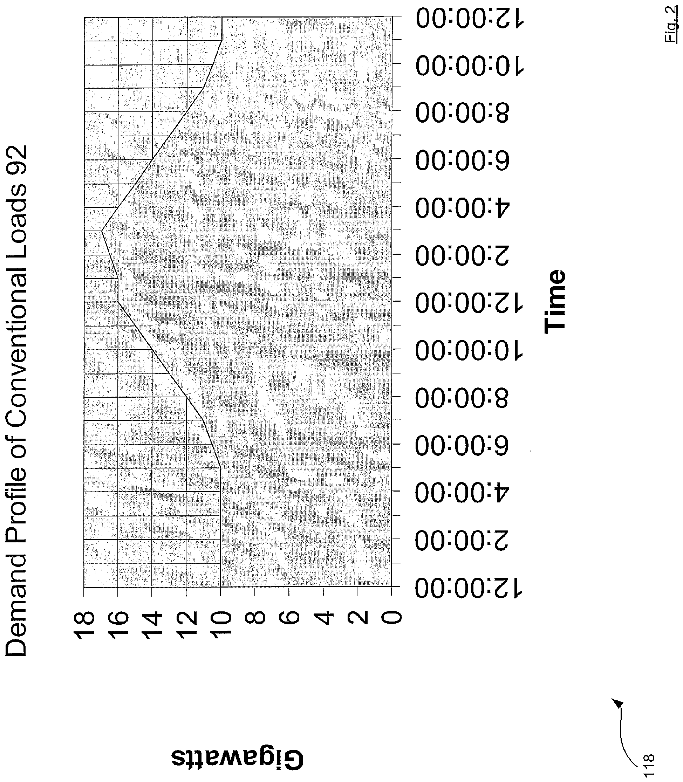

As will be understood by those of skill in the art, network 50 has an energy demand profile that can be compiled from historic data of demand activity on network 50 and which can be used to provide a fairly accurate prediction of future demand activity. Table I shows an energy demand profile caused conventional consumer loads 92. Figure 2 shows a graphical representation of the energy demand profile listed in Table I, indicated at 118.

**Table I**

| Exemplary Demand Profile of Loads 92 | |
|---|---|
| Time | Demand (GW) |
| 12:00:00 AM | 10 |
| 1:00:00 AM | 10 |
| 2:00:00 AM | 10 |
| 3:00:00 AM | 10 |
| 4:00:00 AM | 10 |
| 5:00:00 AM | 10 |
| 6:00:00 AM | 10.5 |
| 7:00:00 AM | 11 |
| 8:00:00 AM | 12 |
| 9:00:00 AM | 13 |
| 10:00:00 AM | 14 |

(continued)

| Exemplary Demand Profile of Loads 92 | |
|---|---|
| Time | Demand (GW) |
| 11:00:00 AM | 15 |
| 12:00:00 PM | 16 |
| 1:00:00 PM | 16 |
| 2:00:00 PM | 16.5 |
| 3:00:00 PM | 17 |
| 4:00:00 PM | 16 |
| 5:00:00 PM | 15 |
| 6:00:00 PM | 14 |
| 7:00:00 PM | 13 |
| 8:00:00 PM | 12 |
| 9:00:00 PM | 11 |
| 10:00:00 PM | 10.5 |
| 11:00:00 PM | 10 |
| 12:00:00 AM | 10 |

It can thus be seen that loads 92 have a substantially fixed (i.e. predictable) energy demand profile. In contrast to loads 92, however, the demand profile caused by electrolysers 78 can be characterized as being "on-demand", in that their energy demand profile can be dynamically matched to the availability of energy in network 50. Put in other words, since electrolysers 78 can be used to create and store hydrogen at any time, regardless of when that hydrogen is to be consumed by fuel cell 82 and/or HPVs 90, it is possible to choose at which times that electrolysers 78 will be activated to store hydrogen for later use by fuel cell 82 and/or HPVs 90.

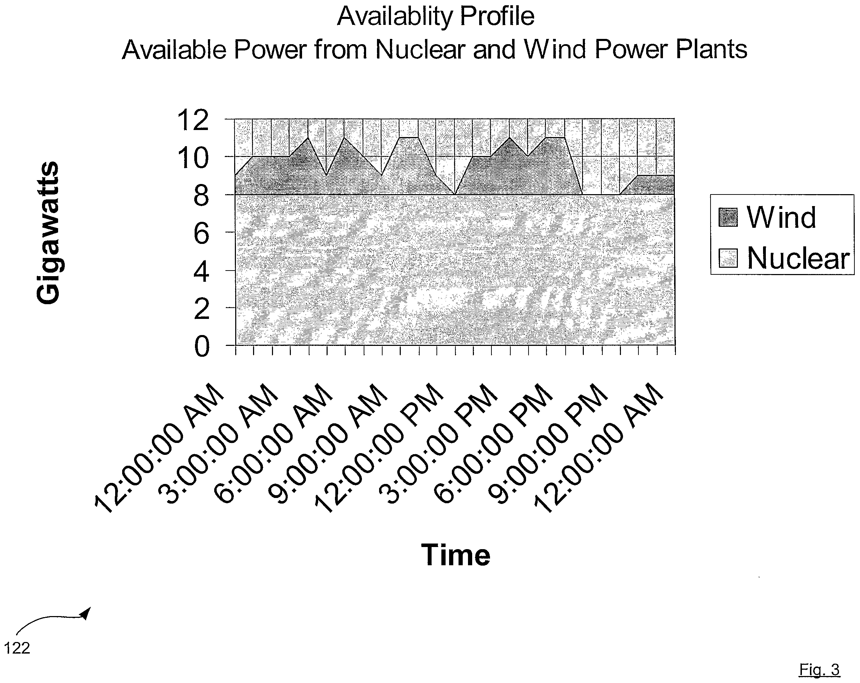

Network 50 also has an energy availability profile that reflects the output of energy from stations 54. However, such an energy availability profile is not as predictable as the energy demand profile 118. This is due to the unique nature of the power generation equipment, and as such the availability profile of each type of station 54 will vary. For example, output from nuclear power plant 62 will be fairly constant, due to the fact that startups and shutdowns of nuclear power plants are difficult. This means that any excess power from nuclear power plants in a network such as network 50 needs to be shunted to a non-consumer load, thereby wasting the power. By the same token, output from wind farm 70 is extremely random, subject to fluctuations in weather and wind conditions. The random nature of the output from wind farm 70 makes it difficult to match the output of wind farm 70 with the demand shown in demand profile 118. Table II shows an exemplary energy availability profile from nuclear power plan 62 and wind farm 70. Figure 3 shows a graphical representation of the combined nuclear and wind energy availability profile listed in Table II and is indicated generally at 122.

**Table II**

| Exemplary Availability Profile of Nuclear Power Plan 62 and Wind-Farm 70 | | |
|---|---|---|
| Time | Nuclear (GW) | Wind (GW) |
| 12:00:00 AM | 8 | 2 |
| 1:00:00 AM | 8 | 3 |
| 2:00:00 AM | 8 | 0 |
| 3:00:00 AM | 8 | 2 |
| 4:00:00 AM | 8 | 1 |
| 5:00:00 AM | 8 | 2 |

(continued)

| Exemplary Availability Profile of Nuclear Power Plan 62 and Wind-Farm 70 | | |
| --- | --- | --- |
| Time | Nuclear (GW) | Wind (GW) |
| 6:00:00 AM | 8 | 0 |
| 7:00:00 AM | 8 | 1 |
| 8:00:00 AM | 8 | 1 |
| 9:00:00 AM | 8 | 3 |
| 10:00:00 AM | 8 | 0 |
| 11:00:00 AM | 8 | 2 |
| 12:00:00 PM | 8 | 2 |
| 1:00:00 PM | 8 | 0 |
| 2:00:00 PM | 8 | 0 |
| 3:00:00 PM | 8 | 1 |
| 4:00:00 PM | 8 | 0 |
| 5:00:00 PM | 8 | 0 |
| 6:00:00 PM | 8 | 1 |
| 7:00:00 PM | 8 | 0 |
| 8:00:00 PM | 8 | 0 |
| 9:00:00 PM | 8 | 2 |
| 10:00:00 PM | 8 | 2 |
| 11:00:00 PM | 8 | 3 |
| 12:00:00 AM | 8 | 0 |

It can thus be seen that the energy availability profile of a station 54 such as nuclear power plant 62 is substantially fixed, whereas the energy availability profile of a station 54 such as wind farm 70 is substantially random.

In contrast to nuclear power plant 62 and wind farm 70, other stations 54 can be characterized as being "on-demand", in that their energy availability profile can be dynamically matched to the demand being experienced by network 50. Thus, coal power plant 58 and natural gas power plant 66 can be considered "on-demand" power stations 54, that are operable to generate power on an as-needed basis according to the overall energy demand profile of network 50.

As is understood by those of skill in the art, the on-demand aspect of plants 58 and 66 make them suitable for helping to dynamically vary the amount of power being generated by stations 54 to match the needs of the energy demand profile 118 of conventional loads 92. As is also understood by those of skill in the art, a skillful combination of substantially fixed power stations (i.e. nuclear) with "on-demand" power stations can be used to match the energy demand profile 118 of conventional loads 92. However, such combination is more difficult when random power stations (such as wind farm 70) are introduced. Also, a period of overproduction can lead to at least a temporary need for shunting power output from nuclear power plant 62.

(While not included in network 50, it will now be understood by those of skill in the art that in other embodiments, network 50 can include other types of stations 54, that can also be classified as fixed, random, "on-demand", and/or combinations thereof. One example of another type of station 54, with its own availability profile is a plurality of solar panels, which can be less random than wind farm 70, but still more random than nuclear power plant 62. A still further example of an "on-demand" station is a hydro-electric generating dam: because of hydraulic storage in the reservoir, the output can be throttled to meet load. For example hydro-electric generators can be used to control grid frequency - so called automatic generation control (AGC)).

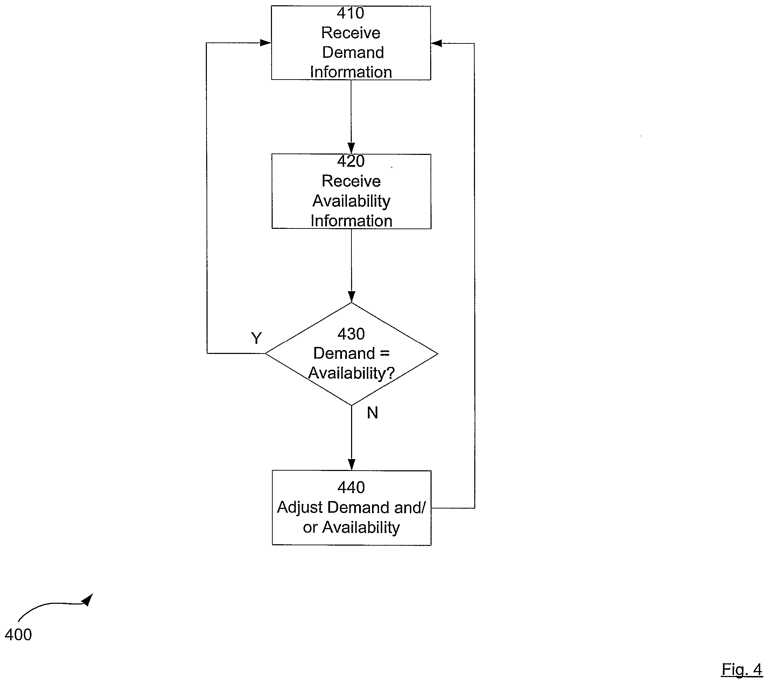

Referring to Figure 4, a method for controlling an energy network is indicated generally at 400. In order to assist in the explanation of the method, it will be assumed that method 400 is operated using controller 102 to control network 50. Furthermore, the following discussion of method 400 will lead to further understanding of network 50. (However, it is to be understood that network 50 and/or method 400 can be varied, and need not work exactly as discussed herein in conjunction with each other, and that such variations are within the scope of the present invention.)

Beginning first at step 410, demand information is received. Such information is received at controller 102, from electrolysers 78 and conventional loads 92, along the data cabling associated with transmission lines 98 and via grid 74. Such demand information can take the form of information regarding each electrolyser 78, plus a demand profile of conventional loads 92 such as demand profile 118. The information associated with each electrolyser 78 would include the amount of hydrogen currently being stored in each hydrogen tank associated with its respective electrolyser 78, as well as forecasts of expected hydrogen demand at each respective electrolyser 78, to provide an estimate of how long the remaining amounts of hydrogen stored at that electrolyser 78 will last, and/or to estimate how long the electrolyser 78 will need to be run in order to keep up with future demands.

Next, at step 420, availability information is received. Such availability information can take the form of availability profile 122, and can also include the on-demand capacity that is available from coal power plant 58 and natural gas power plant 66.

Next, at step 430, it is determined whether the demand information received at step 410 matches availability information received at 420. If there is a match, then method 400 returns to step 410 and method 400 begins anew. If however, there is a mismatch, then method 400 advances to step 440. What constitutes a match, will of course typically include a provision for a certain amount of excess availability to match any spikes in demand. The amount of excess availability to be provided can be determined using known techniques.

Next, at step 440, demand is adjusted, or availability is adjusted, as appropriate, in order to bring the availability and demand closer towards a match. For example, where only nuclear power plant 62 and wind farm 70 are operational, and where the combined availability from nuclear power plant 62 and wind farm 70 exceed the current demand from conventional loads 92, then controller 102 can instruct one or more of electrolysers 78 to commence hydrogen production, and thereby consume that excess demand. The criteria for picking which ones of electrolysers 78 should commence production of hydrogen is not particularly limited, and can include a determination of the amount of hydrogen currently being stored at that electrolyser 78 and/or the forecast for hydrogen consumption at that electrolyser 78. Wherever need is greatest, then that electrolyser 78 can be activated, subject to constraints in the capacity of transmitting over grid 74.

As another example of how step 440 can be performed, where only nuclear power plant 62 and wind farm 70 are operational, and where the combined availability from nuclear power plant 62 and wind farm 70 is below the current demand from the combination of conventional loads 92 and electrolysers 78, but still exceeds the amount of demand from conventional loads 92, then one or more electrolysers 78 can be instructed to cease hydrogen production to bring the demand down to a level that matches with the availability from nuclear power plant 62 and wind farm 70.

The frequency with which method 400 cycles is based, at least in part, on the ability of various elements in network 50 to react to instructions issued at step 440 from controller 102. Accordingly, it is to be understood that the demand information received at step 410 also includes a certain degree of forecasting that takes into account the amount of time needed to activate or deactivate an electrolyser 78 and/or a power plant such as power plant 58 and 66. Thus controller 102 may schedule the operation of the electrolysers 78 on a "day forward" basis or in a schedule period co-incident to the scheduling of the general power grid so that power transactions with grid can be scheduled. During the operating period of the schedule controller 102 monitors operation of the different electrolysers 78 and power availability to make supply corrections to balance energy flows as needed, and ensure that various contract obligations between different entities that operate different portions of network 50 are being complied with. Also, since the operator of electrolysers 78 is typically different than the operator of grid 74, it is contemplated that the operator of electrolysers 78 can schedule power sales and purchases with the operator of grid 74 to optimize their value and the second level of dynamic control where electrolysers are used to manage demand, either managing random resources or providing ancillary service type functions. Thus, the particular frequency and way in which method 400 cycles will be affected by this type of scheduling, and such variations should now be apparent to those of skill in the art.

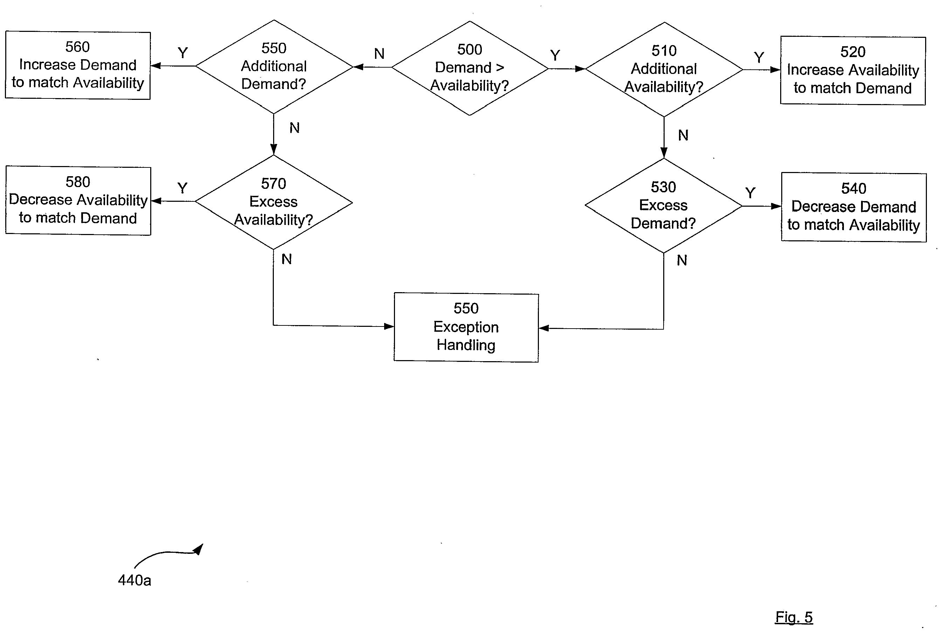

Referring to Figure 5, an exemplary set of sub-steps for performing step 440 of method 400 is indicated generally at 440a. Beginning at step 500, a determination is made as to whether demand is greater than the availability. This can be performed by controller 102 simply monitoring the level of demand experienced by electrolysers 78 and conventional loads in relation to the availability from generating stations 54. If demand exceeds availability, then the method advances to step 510 at which point a determination is made if there is any additional availability. This is also performed by controller 102, which examines the output from generating stations 54 to see if there is any additional capacity for generation from any one or more of those stations 54. If there is additional availability (i.e. not all stations 54 are operating at peak capacity), then the method advances to step 520 where controller 102 can instruct an appropriate one of stations 54 to produce additional power to meet the demand.

If, however, at step 510 it is determined that there is no additional availability, then the method advances to step 530 at which point a determination is made as to whether there is excess demand. Put in other words, a determination is made as to whether any of the electrolysers 78 that are currently 'on' can be turned 'off' (or at least scaled back in power consumption) in order to ease the overall demand on grid 74.

If it is determined at step 530 that there is excess demand, then the method advances to step 540 and at this point demand is decreased to match the availability, by turning 'off' (or scaling back power consumption) of an appropriate one of electrolysers 78. Typically, an electrolyser 78 that had a sufficient amount of hydrogen in its holding tanks to meet short term hydrogen demand would be the candidate chosen for scaling back power consumption from grid 74.

However, if, in the unlikely event that it is determined at step 530 that there is no excess in demand (for example, all electrolysers 78 are turned "off" and the excess demand is being created by conventional loads 92), then the method will advance to step 550 for exception handling. A situation as this can result in brown outs or rolling blackouts throughout conventional loads 92, or, more likely, the operator of grid 74 would pull on any available reserves in the network, and/or make use of any other network to which grid 74 is attached to obtain reserves, given the requirement for operators of grids to have such reserves available to avoid brown outs and blackouts.

Returning to step 500, if it is determined that availability is greater than demand at step 500, then the method will advance to step 550 at which point a determination will be made as to whether there is any additional demand that can be added to grid 74 to make up for the excess availability. For example, where controller 102 determines that one or more electrolysers 78 are not "on" or otherwise at full capacity to produce hydrogen, then it will be determined at step 550 that there is additional demand that can be added to grid 74, and so the method will advance to step 560 and demand will be increased on grid 74 to match that availability. Thus, typically at step 560 controller 102 will instruct an appropriate one or more of electrolysers 78 to begin hydrogen production and thereby absorb the excess availability from power station 54. This situation could arise where wind farm 70 is experiencing a high level of wind which is providing additional availability to grid 74, such that the overall availability from power stations 54 exceeds the demand from conventional loads 92, then controller 102 can determine which electrolysers 78 are in need of hydrogen production, and accordingly, instruct an appropriate one of those electrolysers 78 to begin hydrogen production and thereby absorb the excess availability from power station 54.

However, if at step 550 it is determined that there is additional demand that can be added to grid 74, (i.e. all electrolysers 78 are "on" and operating at full capacity) then the method will advance to step 570 at which point a determination will be made as to whether there is any excess availability. Put in other words, a determination is made as to whether any power stations 54 can be turned "off", or have their production scaled back, in order to reduce the availability to match the demand on grid 74. For example, if natural gas power plant 66 is operational, then production of power therefrom can be scaled back to reduce the overall availability from stations 54 and the overall availability towards a match with the demand.

However, if at step 570 it is determined that there is no excess availability then the method will advance to step 550 for exception handling. For example, where all stations 54 are "off" except nuclear power plant 62 then power from nuclear power station 62 can be shunted into a power sink, or, in very rare circumstances, nuclear power station 62 will be shut down. Typically nuclear power stations will simply continue to operate and dump load by shunting excess power to the generation of steam. In the invention, excess hydrogen production is dumped into natural gas pipelines.

It should now be apparent that method 400 can be modified to provide a high level of sophistication to match availability with demand. For example, each power station 54 can be identified by a number of different criteria that can be used in the process of determining which power stations 54 should be turned "off" or turned "on" in order to match current demand. Table III shows an exemplary set of criteria that can be associated with each power station 54.

**Table III**

| Power Station Criteria | | | | | |
|---|---|---|---|---|---|
| **Station** | **Station Owner** | **Emission Type** | **Fuel Type** | **Efficiency Rating** | **Availability Response** |
| Coal power plant 58 | A Corp | Dirty $CO_2$ | Coal | A | High |
| Nuclear power plant 62 | B Corp | Nuclear Waste | Uranium | B | Fixed |
| Natural gas power plant 66 | C Corp | Clean $CO_2$ | Natural Gas | B | High |
| Wind-farm 70 | B Corp | None | Renewable | A | Random |

For greater detail, Table III shows five columns of criteria associated with each power station 54. Column 1 is the Station Owner, which indicates the private or public entity that actually owns and operates the power station 54. Column 2 is the Emission Type, which indicates the type of effluent or emissions or other harmful substances generated by that station. Thus, note that coal power plant 58 is considered "Dirty $CO_2$", while natural gas power plant 66 is considered "Clean $CO_2$", meaning that while both plant 58 and 66 produce carbon dioxide ("$CO_2$"), the overall emissions

from plant 66 are considered cleaner (i.e. less criteria pollutants and lower $CO_2$ emissions per kWh generated) and less harmful to the environment. By the same token, note that nuclear power plant 62 is classified as producing nuclear waste, which is not an emission but still harmful to the environment and/or awkward to store in a safe manner. Finally, note that wind farm 70 is considered to have no emission type, since it does not generate emission.

Column 3 of Table III indicates the type of fuel that is used by each power station 54. Column 4 of Table III indicates an efficiency rating associated with each power station 54. An "A" rating according to the present example is considered to be of higher efficiency than a "B" rating. (However, note that such efficiency ratings relate to the efficiency of a particular power station 54 in relation to other power stations 54 that are based on the same fuel type. Different stations 54 of the same fuel type can then be compared based on their efficiency in relation to each other. However, in the present example all stations are of different types, so the efficiency rating described below is simply a contributing factor in determining the cost of operating a particular station 54.) Finally, Column 5 of Table III refers to the availability response of each power station 54. Thus, coal power plant 58 and natural gas power plant 66 are considered to have high availability and therefore to be easily added or removed from operation and overall availability to grid 74. (Other factors can affect the availability even of high availability stations -- for example, the availability of coal as a fuel is relevant since it takes time to fire-up a coal boiler.) Nuclear power plant 62 is considered to have a fixed availability and therefore not easily added or removed from operation and overall availability to grid 74. Wind farm 70 is considered to be random, and therefore also not easily added or removed from operation and overall availability to grid 74.

By the same token, each electrolyser 78 and conventional loads 92 can be identified by a number of different criteria that can be used in the process of determining which demands placed on grid 74 can or should be turned "off" or turned "on" in order to match availability. Table IV shows an exemplary set of criteria that can be associated with electrolyser 78 and conventional loads 92.

**Table IV**

| Demand Criteria | | | | | |
|---|---|---|---|---|---|
| Load | Owner | Load Type | Emission Penalty? | Hydrogen Storage Capacity | Demand Response |
| Electrolyser $78_1$ | D Corp | Electrical | No | High | High |
| Electrolyser $78_2$ | E Corp | HPV Filling Station | Yes | Medium | High |
| Electrolyser $78_3$ | F Corp | HPV Filling Station | Yes | Low | High |
| Conventional Load 92 | Local utility | Electrical | No | None | Fixed |

For greater detail, Table IV shows six columns of criteria associated with the loads on grid 4. Column 1 identifies the load, as previously described. Column 2 is the Owner of the load, which indicates the private or public entity that actually owns and operates the load. Column 3 indicates the load type, also as previously described. Column 4 indicates whether there is an emission penalty associated with the means by which the power was generated. In other words, where the Emission Penalty indicates "No", it means that there is no additional cost (such as taxation) levied against the owner of the load, regardless of whether the power station 54 that generated the power actually used by the load actually generates emission or not. However, where the Emission Penalty indicates "Yes", it means that an additional cost (such as taxation) will levied against the owner of the load, if the power station 54 that generated the power actually used by the load generates emission. Thus, in the example given in Table IV, where the load is used to fill HPVs with hydrogen, then an emission penalty will be levied, but if the load is simply delivering electricity to consumers, then no emission penalty is levied. (Alternatively, or additionally, such an emission penalty may be calculated according to the end use application. In a market like transportation fuel, penalties typically apply, depending on amount and type of emission, such penalty being comparable to the fuel equivalent suppliers such as gasoline, or other types of hydrogen suppliers such as Steam Methane Reformers ("SMR")).

Column 5 of Table IV identifies the hydrogen storage capacity, and thus electrolyser $78_1$ is indicated as having a "high" level of storage capacity; electrolyser $78_2$ is indicated as having a "medium" level of storage capacity; and electrolyser $78_3$ is indicated as having a "low" level of storage capacity; and conventional loads 92 have no storage capacity. Finally, Column 6, Demand Response, identifies that electrolysers 78 have a "high" level of demand response in that they can be quickly turned "off" or "on" (or set to some level in between based on hydrogen demand constraints) by controller 102, while conventional loads 92 cannot turned "off" or "on" by controller 102, and are a fixed demand on grid 74.

It should now be apparent that the various types of criteria are merely exemplary and that other criteria can be provided as desired. It should also now be apparent that method 400 can be operated in a more sophisticated manner than earlier described by having the information in Table IV be received at step 410 as part of the demand information, and the information Table III be received at step 420 as part of the availability information. The determination as to whether there is a "match" at step 430, and the adjustments performed at step 440 can thus be very sophisticated by utilizing various weights of criteria provided in Table III, Table IV and in conjunction with the current operating realities of system 50.

Many examples of how such adjustments are made at step 440 will now occur to those of skill in the art. As one very simple example, such adjustments can be based simply on a pure match between the owner of the load with the owner of the power station. In other words, if D Corp (owner of electrolyser $78_1$) has agreed to buy power from C Corp (owner of natural gas plant 66), then controller 102 can be configured to ensure that electrolyser $78_1$ is activated at times that natural gas plant 66 is active so that the amount power delivered to electrolyser $78_1$ matches a certain level of output from natural gas plant 66.

More sophisticated matching is typically contemplated however, as various weights are applied to each of the criteria in Table III and Table IV as a way of arriving at which electrolysers 78 are activated or deactivated to increase or decrease demand, and/or which power stations 54 are activated or deactivated to increase or decrease availability to achieve a desired match there between.

Still further sophisticated matching is contemplated as controller 102 is provided with information data network 110 that can be related to the other information in Tables III and IV to achieve a desired match in demand and availability, and thereby provide additional demand information at step 410 and availability information at step 420. Table V shows an exemplary set of criteria that can be provided over data network 110.

**Table V**

| Demand Criteria | | | |
| --- | --- | --- | --- |
| **Power Station Fuel Type** | **Efficiency Rating** | **Marginal Cost** | **Emission Cost** |
| Coal | A | $0.08/kWh | $0.04/kWh |
| Coal | B | $0.10/kWh | $0.05/kWh |
| Natural Gas | A | $0.09/kWh | $0.02/kWh |
| Natural Gas | B | $0.11/kWh | $0.03/kWh |
| Uranium (Nuclear) | A | $0.07/kWh | $0.01/kWh |
| Uranium (Nuclear) | B | $0.09/kWh | $0.02/kWh |
| Wind | A | $0.10/kWh | $0.00/kWh |
| Wind | B | $0.11/kWh | $0.00/kWh |

Thus, the information Table V can be used by controller 102 in conjunction with the information in Tables III and IV to arrive at a cost determination associated with using a particular power station 54 to provide power to a particular electrolyser 78 and/or conventional loads. Thus, note that when supplying electrolyser $78_2$ and electrolyser $78_3$ the emission cost in Table V will need to be added in to arrive at a total cost for producing power to meet the demand of that load, however, such emission cost would not be needed when determining costs for supplying electrolyser $78_1$ and conventional loads 92. It should now be apparent that Table V can reflect market data that is updated on a continuous basis using data from an energy exchange or other market for trading energy. It should also now be apparent that the concept of "emission cost" can be based on many different forms such as tonnage of emitted $CO_2$, NO, CO etc., nuclear fuel waste and/or other hazardous material that is emitted by a particular power station 54. Such emission cost can be based on government emission credits or taxes, and/or actual hazardous material disposal costs, and/or emission levels related to these costs which are less than pre-defined limits for purpose of labeling fuel in certain markets, and/or the like. It should also be understood that the concept of marginal cost in Table V is merely for demonstration purposes and that other concepts of marginal cost can apply. For example, a marginal cost (cost of next kWh) can be the marginal cost of electricity required to produce hydrogen, which would relate to marginal electricity price from electricity producers. In a competitive electricity market the marginal cost of the grid-connected resources can be determined by the market spot price, whereas for captive power generators it can be the fuel price determining whether they supply. In electricity spot market nuclear or wind are "price takers", because if on they are committed. This detail in design of an energy network can vary according to where the network is deployed.

Other costs that could be included into Table V include marginal and/or emission costs that are reduced for off-peak usage and/or transmission costs.

In general, it should now be understood that the availability information can include one or more types and quantities of emission produced per unit of electricity produced for each power station. Examples of types and quantities of emission include a measurement of the mass (e.g. kilograms or tons) of emitted $CO_2$, NO, CO, etc. per kWh of electricity produced by a given generating station. Similarly, the demand information can include an emission penalty associated with that load, and the adjusting of demand and availability can be made at least in part by adjusting availability at one of the power stations having a reduced amount of pollutants produced per kWh in relation to another one of the generating stations. It should now be apparent that this can provide a means of attributing the amount of emissions produced by a given HPV or fleet of HPVs using a particular electrolyser, by tracing back the electricity used by that electrolyser to generate the hydrogen for that HPV to a particular generating station. As part of its function, controller 102 can track this information and keep records thereof to provide a method of also verifying the amount of emissions attributable to a particular electrolyser and/or HPVs that fuel up at a particular electrolyser. Such verification can be later used for a variety of purposes, such as an audit trail proving that a particular set of laws or regulations or treaties are being complied with.

In another embodiment of the invention, HPVs 90 are equipped with wireless transmitters that communicate with via data network 110 to controller 102. The transponders identify the location of each HPV 90 in relation to electrolyser $78_2$ and electrolyser $78_3$, and identify the amount of hydrogen fuel that is stored in the HPV 90. Controller 102 is then operable to estimate whether a particular HPV 90 is more likely to refuel at electrolyser $78_2$ or electrolyser $78_3$, and thereby assess the hydrogen demand needs of electrolyser $78_2$ or electrolyser $78_3$ and to schedule production of hydrogen for those electrolysers 78 accordingly.

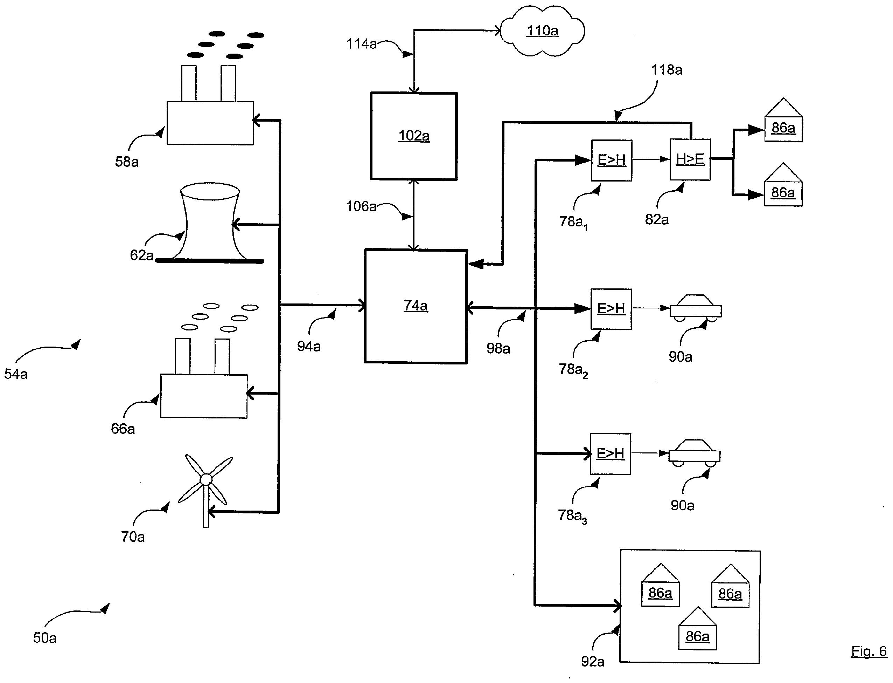

Referring now to Figure 6, an energy network in accordance with another embodiment of the invention is indicated generally at 50a. Network 50a includes the same elements as network 50, and like elements in network 50a bear the same reference as their counterparts in network 50, except followed with the suffix "a". In contrast to network 50, however, network 50a also includes an additional set of transmission lines 118a that connect fuel cell 82a to grid 74a. In this configuration, fuel cell 82a can be a load in relation to grid 74a that supplies power to consumers 86a, or, fuel cell 82a can be an additional power station that can provide additional power to grid 74a, (and thereby provide power to 92a) to add to the power already being provided by power stations 54a. Controller 102a can thus be used to issue instructions to fuel cell 82a to behave as a power station and supply power to grid 74a, or controller 102a can leave fuel cell 82a to simply supply power to consumers 86a attached thereto. Network 50a also allows for a means to, in effect, ship or transport hydrogen from electrolyser $78a_1$ to electrolyser $78a_2$ and/or electrolyser $78a_3$ without the need to physically transport the hydrogen between those destinations. In this way the operator of grid 74a has additional control over flows and also can collect fees for hydrogen transmission service. Also note that the cost of transporting hydrogen by truck or train can then be compared with the cost of transporting hydrogen by converting it to electricity and carrying through the grid. Such cost comparisons can also include relative efficiencies between transportation methods. (i.e. the amount of fuel burned, and emissions generated by the truck that would be used to physically carry the hydrogen from the source electrolyser to the destination electrolyser, vs. the amount of hydrogen produced at the destination electrolyser in relation to the amount of hydrogen required to generate the electricity used to power the destination electrolyser during generation of hydrogen at the destination electrolyser.)

Also, as the operator of grid 74a is typically required to abide by reliability regulations that require back up power generators be available on various levels of response (i.e. "spinning" to provide a fifteen minute response time) such back up power can be made available by having the operator of grid 74a contract for such backup power with the operator of electrolyser $78a_1$ with the view that hydrogen reserves at electrolyser $78a_1$ can be converted back into electricity that is returned to grid 74a for general consumption (e.g., at 92a).

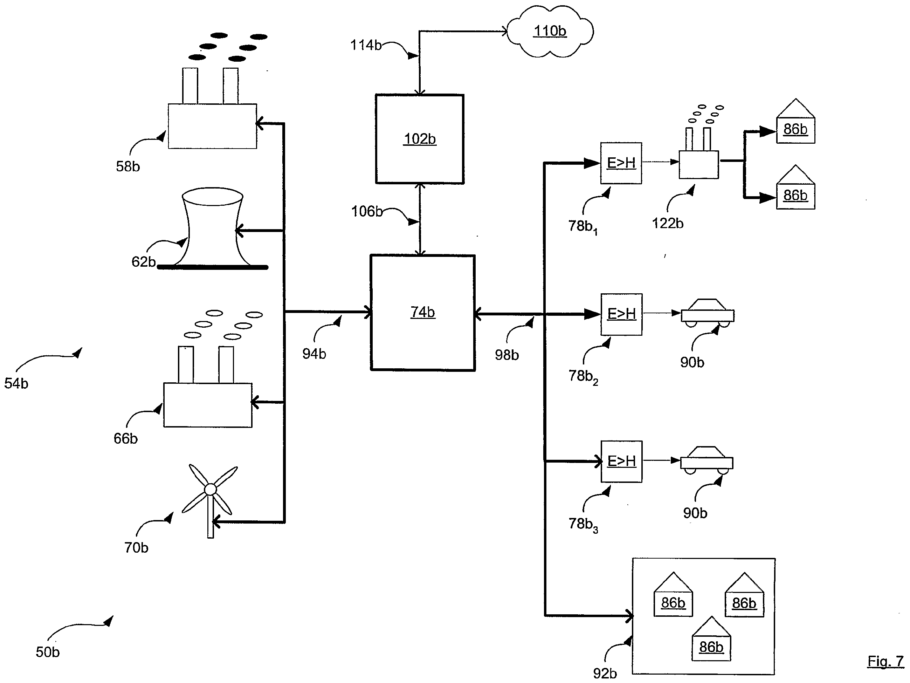

Referring now to Figure 7, an energy network in accordance with another embodiment of the invention is indicated generally at 50b. Network 50b includes the same elements as network 50, and like elements in network 50b bear the same reference as their counterparts in network 50, except followed with the suffix "b". In contrast to network 50, however, network 50b includes a hybrid hydrogen/natural gas power plant 122b that can receive hydrogen from electrolyser $78b_1$. Hybrid hydrogen/natural gas power plant 122b primarily utilizes natural gas to generate electricity or heat for consumers 86b, but in a present embodiment, hybrid hydrogen/natural gas power plant 122b is also operable to utilize hydrogen available from electrolyser $78b_1$ in the event that natural gas is unavailable or it is otherwise desirable to burn hydrogen rather than natural gas. The foregoing embodiment is illustrated herein for demonstration purposes, and is presently less preferred as it can be inefficient to use electricity to generate hydrogen and to then generate electricity because round trip efficiency is presently no better than about 30%. However, this embodiment can be applied when storage capability and transmission capability of a pipeline can be used as way of storing electricity -- for example the natural gas power plant could be a peaking plant. (i.e. a plant that that provides power at peak demand (and typically peak market) times. Typically fast responding gas turbines are used as "peaking generators"). Also, where the energy conversion involves heat as well as electricity there is an improvement in efficiency as heat energy that is otherwise waste is also captured for some use. Also, such reconversion may be useful where emission concerns are being addressed - for example reducing NOx emissions in power turbine through hydrogen injection.

While only specific combinations of the various features and components of the present invention have been discussed herein, it will be apparent to those of skill in the art that desired subsets of the disclosed features and components and/or alternative combinations of these features and components can be utilized, as desired. For example, while electrolysers are discussed as a type of load whose demand can be varied dynamically in other embodiments such variable loads can be batteries, fly-wheels and/or other energy storage devices as desired. Other storage systems include pumped hydraulic and compressed air, and applications such as hot water heaters could operate the same way, except that they do not offer the opportunity to provide fuel to vehicles in the way hydrogen provides power to HPVs. Other types of electrolysers can be included such as electrolysers used for industrial applications. The industrial electrolyser example is particularly desirable where grid 74 is engaged in interuptability contracts with the industrial electroylsers. As will be appreciated by those of skill in the art, so called "Interruptibility Contracts", can be used for large electrolysers producing hydrogen for industrial applications, where such electrolysers can be turned off for certain periods on signals from the grid operator. The grid operator would pay a monthly rate of, e.g., $10-$20/kW of interruptible power for the right to effect such interruptions. During the interruption periods, the industrial application would take hydrogen from storage. Such discounts for interruptions, combined with emission credits, can provide desirable value, in for example, reducing the amount of time needed to pay back the capital cost for installing the industrial electrolyser plant. Such interuptibility contracts can be administered by controller 102, as controller 102 instructs various electrolysers to cease production according to contracts between grid 74 and those electrolysers, based on instructions fro grid 94.

While the embodiments herein generally contemplate that portions of network 50 are owned and/or operated by a single entity, it is to be understood that, in practice, different entities will typically operate different portions of network 50. For example, the operator of grid 74 can be different than the operator of electrolysers 78 and/or stations 54 and/or loads 92 and/or controller 102. Where grid 74 is independently owned and operated, it is typical that all power transfers on grid 74 are cleared by the grid operator. As another example, where controller 102 is owned and operated by the same party that owns and operates electrolysers 78, then controller 102 can act as a broker between electrolysers 78 and the various ones of stations 54 to arrange for an optimum or otherwise desired match (i.e. based on cost, emission, etc.) between the demands of electrolysers 78 and availability from stations 54.

In general, it should now be apparent that the embodiments herein can be useful for improving overall stability of an electricity grid. In particular, electrolysers can be responsive loads, dynamically being added or removed from the overall demand on the grid, which can ease instability as the grid experiences ramping up and ramping down of demand during a given twenty four period. This improvement in stability can in and of itself be a service delivered by the operator of the electrolysers and the network controller to the operator of the grid, charging a fee to the operator of the grid for providing such stability. By the same token, the ability to offer operating reserves to the operator of grid (as shown in network 50a) can also be a service for which the operator of the electrolysers can charge a fee to the operator of the grid.

The above-described embodiments of the invention are intended to be examples of the present invention and alterations and modifications may be effected thereto, by those of skill in the art, without departing from the scope of the invention which is defined solely by the claims appended hereto.

**Claims**

1. An energy network comprising:

   a plurality of variable power loads including at least one electrolyser, the plurality of variable power loads being connected to a plurality of electricity generating stations by a grid, wherein the electrolyser is located at a point on the grid adapted to relieve periods of excess supply over demand, or instability where a renewable energy source is connected; and a controller connected to receive requests from said grid and operable to control said at least one electrolyser in response to said requests to relieve periods of excess supply over demand or instability by absorbing power from said renewable energy source to generate hydrogen which is dumped to a natural gas pipeline.

2. The energy network of claim 1 further comprising a data network connected to the controller and available for use by the controller in approaching a match between said demand and said availability of power.

3. The energy network of claim 2 wherein said match is based in part on at least one of determining which of a plurality of adjustments produces a reduced amount of harmful emissions in comparison to another adjustment, and which of a plurality of adjustments has a least amount of financial cost in the marginal cost required to produce electricity.

4. The energy network of any one of the preceding claims wherein the controller comprises a processor having a plurality of programming instructions operable to match said demand and said availability of power.

5. The network of any one of the preceding claims wherein said plurality of electricity generating stations includes at least one of a nuclear power plant, a coal fired power plant, a natural gas power plant, a wind farm, a solar power farm, a hydroelectric dam, and a hydrogen cell for converting hydrogen to electricity.

6. The network of any one of the preceding claims comprising at least one hydrogen cell for generating electricity at a first location and at least one electrolyser for converting electricity from hydrogen at a second location, said network being usable for transferring hydrogen from said first location to said second location by converting hydrogen at the first location to electricity, introducing said electricity into said grid, drawing electricity from said grid at the second location, and converting, at said second location, said drawn electricity to hydrogen.

7. The network of claim 6 wherein the conversion of hydrogen at the first location is in response to a demand for hydrogen at the second location.

8. The network of claim 6 wherein the conversion of electricity to hydrogen at the second location is in response to a supply of electricity from the first location.

9. The network of any one of the preceding claims wherein the plurality of loads comprises a set of conventional loads.

10. The network of any one of the preceding claims wherein said plurality of electricity generating stations comprises a first power station having an availability profile that is substantially fixed and a second power station having an availability profile that is substantially random.

11. The network of claim 10, wherein the demand of said at least one electrolyser is modulated based on the availability of power from said second power station.

12. The network of claim 10 or 11 wherein said first power station is a nuclear power station and said second power station is a wind farm.

13. The network of any one of the preceding claims wherein demand is based at least in part on a measured amount of stored hydrogen available at an electrolyser, said measured amount being based on at least one of a) pressure, temperature and volume in compressed storage tanks, and b) pressure, temperature, volume, and mass of metal hydride in metal hydride gas storage.

14. The network according to claim 2, said network further comprising a fuel cell connected to said at least one electrolyser for converting hydrogen to electricity for introduction to said grid, and wherein said approach to a match includes activating said fuel cell for delivery of electricity to said grid.

15. The network of claim 14 wherein said approach to a match includes activating said at least one electrolyser to absorb availability from said generating stations.

16. The network of any one of the preceding claims comprising at least one fuel cell, wherein the grid is stabilized by absorbing a decrease in demand by activating at least one electrolyser; and absorbing a decrease in availability by activating at least one fuel cell or turning down one electrolyser.

17. The network of any one of the preceding claims, wherein said controller is further operable to set the demand from individual variable power loads within a group of variable power loads, which includes said electrolyser, such that a sum of the individual demands of the group provides ancillary services to said grid and thereby assists in providing a match between the demand for power and the availability of power in said grid.

18. A method of controlling at least one electrolyser in an energy network comprising a plurality of variable power loads, the plurality of variable power loads being connected by an electricity grid to a plurality of electricity generating stations including at least one renewable energy source, the method comprising locating the electrolyser at a point on the electricity grid adapted to relieve periods of excess supply over demand or instability where a renewable energy resource is connected and controlling said at least one electrolyser according to requests from said grid, to relieve periods of excess supply over demand or instability by absorbing the otherwise excess availability of power from said renewable energy source to generate hydrogen which is dumped to a natural gas pipeline.

19. The method of claim 18, further comprising setting the demand from individual variable power loads within a group of variable power loads, which includes said electrolyser, such that a sum of the individual demands of the group provides ancillary services to said grid and thereby assists in providing a match between the demand for power and the availability of power in said grid.


**Patentansprüche**

1. Energienetzwerk mit:

   einer Vielzahl von variablen Leistungslasten mit zumindest einem Elektrolyseur, dabei ist die Vielzahl von variablen Leistungslasten mit einer Vielzahl von elektrizitätserzeugenden Stationen über ein Netz verbunden, wobei der Elektrolyseur an einem Punkt auf dem Netz angeordnet ist, der dazu angepasst ist, Perioden eines über eine Nachfrage hinausgehenden Versorgungsüberschusses oder Instabilität zu entlasten, bei denen eine erneuerbare Energiequelle verbunden ist; und einer Steuervorrichtung, die verbunden ist, um Anfragen von dem Netz zu empfangen und dazu betriebsfähig ist, in Erwiderung auf die Anfragen zumindest den einen Elektrolyseur zu steuern, um Perioden eines über eine Nachfrage hinausgehenden Versorgungsüberschusses oder Instabilität zu entlasten, durch Absorbierung von Leistung aus der erneuerbaren Energiequelle zur Erzeugung von Wasserstoff, der in einer Erdgaspipeline entladen wird.

2. Energienetzwerk nach Anspruch 1, ferner mit einem Datennetzwerk, das mit der Steuervorrichtung verbunden ist, und zur Verwendung durch die Steuervorrichtung zur Annäherung an eine Übereinstimmung zwischen der Nachfrage und der Verfügbarkeit von Leistung verfügbar ist.

3. Energienetzwerk nach Anspruch 2, wobei die Übereinstimmung zum Teil auf zumindest einer Bestimmung basiert, welche einer Vielzahl von Anpassungen eine reduzierte Menge schädlicher Emissionen im Vergleich zu einer anderen Anpassung produziert, und welche einer Vielzahl von Anpassungen die geringste Höhe an finanziellen Kosten in den zur Produktion von Elektrizität benötigten Grenzkosten aufweist.

4. Energienetzwerk nach einem der vorangegangenen Ansprüche, wobei die Steuervorrichtung eine Prozessorvorrichtung umfasst, die eine Vielzahl von dazu betriebsfähigen Programmieranweisungen aufweist, um die Nachfrage und die Verfügbarkeit von Leistung in Übereinstimmung zu bringen.

5. Netzwerk nach einem der vorangegangenen Ansprüche, wobei die Vielzahl von elektrizitätserzeugenden Stationen zumindest ein Kernkraftwerk, ein Kohlekraftwerk, ein Erdgaskraftwerk, ein Windkraftwerk, ein Solarkraftwerk, einen hydroelektrischen Damm, oder eine Wasserstoffzelle zur Umwandlung von Wasserstoff in Elektrizität beinhaltet.

6. Netzwerk nach einem der vorangegangenen Ansprüche, mit zumindest einer Wasserstoffzelle zur Erzeugung von Elektrizität bei einem ersten Ort und mit zumindest einem Elektrolyseur zur Umwandlung von Elektrizität aus Wasserstoff bei einem zweiten Ort, dabei ist das Netzwerk zur Übertragung von Wasserstoff von dem ersten Ort zu dem zweiten Ort durch Umwandlung von Wasserstoff bei dem ersten Ort in Elektrizität, Einspeisung der Elektrizität in das Netz, Beziehen von Elektrizität von dem Netz bei dem zweiten Ort, und Umwandlung der bezogenen Elektrizität in Wasserstoff bei dem zweiten Ort verwendbar.

7. Netzwerk nach Anspruch 6, wobei die Umwandlung von Wasserstoff bei dem ersten Ort in Erwiderung auf eine Nachfrage nach Wasserstoff bei dem zweiten Ort erfolgt.

8. Netzwerk nach Anspruch 6, wobei die Umwandlung von Elektrizität in Wasserstoff bei dem zweiten Ort in Erwiderung auf eine Versorgung mit Elektrizität von dem ersten Ort erfolgt.

9. Netzwerk nach einem der vorangegangenen Ansprüche, wobei die Vielzahl von Lasten eine Menge von konventionellen Lasten beinhaltet.

10. Netzwerk nach einem der vorangegangenen Ansprüche, wobei die Vielzahl von elektrizitätserzeugenden Stationen eine erste Leistungsstation mit einem im Wesentlichen festgelegten Verfügbarkeitsprofil und eine zweite Leistungsstation mit einem im Wesentlichen willkürlichen Verfügbarkeitsprofil beinhaltet.

11. Netzwerk nach Anspruch 10, wobei die Nachfrage des zumindest einen Elektrolyseurs auf Basis der Verfügbarkeit von Leistung aus der zweiten Leistungsstation moduliert ist.

12. Netzwerk nach Anspruch 10 oder 11, wobei die erste Leistungsstation eine Kernkraftleistungsstation ist und die zweite Leistungsstation ein Windkraftwerk ist.

13. Netzwerk nach einem der vorangegangenen Ansprüche, wobei die Nachfrage zumindest zum Teil auf einer gemessenen Menge gespeicherten bei einem Elektrolyseur verfügbaren Wasserstoffs basiert, und dabei die gemessene Menge zumindest auf a) Druck, Temperatur und Volumen in einem komprimierten Speichertank, oder b) Druck, Temperatur, Volumen und Masse eines Metallhydrids in einem Metallhydridgaslager basiert.

14. Netzwerk nach Anspruch 2, dabei beinhaltet das Netzwerk ferner eine mit dem zumindest einen Elektrolyseur verbundene Brennstoffzelle zur Umwandlung von Wasserstoff in Elektrizität zur Einspeisung in das Netz, und wobei die Annäherung an eine Übereinstimmung eine Aktivierung der Brennstoffzelle zur Belieferung des Netzes mit Elektrizität beinhaltet.

15. Netzwerk nach Anspruch 14, wobei die Annäherung an eine Übereinstimmung eine Aktivierung von dem zumindest einen Elektrolyseur zur Absorbierung einer Verfügbarkeit aus den Erzeugungsstationen beinhaltet.

16. Netzwerk nach einem der vorangegangenen Ansprüche mit zumindest einer Brennstoffzelle, wobei das Netz durch Absorbierung eines Nachfragerückgangs durch Aktivierung von zumindest einem Elektrolyseur stabilisiert ist; und einer Absorbierung einer Verfügbarkeitsabnahme durch Aktivierung zumindest einer Brennstoffzelle oder durch Herunterregeln eines Elektrolyseurs.

17. Netzwerk nach einem der vorangegangenen Ansprüche, wobei die Steuervorrichtung ferner dazu betriebsfähig ist, die Nachfrage durch individuelle variable Leistungslasten innerhalb einer Gruppe variabler den Elektrolyseur beinhaltenden Leistungslasten derartig festzulegen, dass eine Summe der individuellen Nachfragen der Gruppe dem Netz Hilfsdienste bereitstellt, und dadurch eine Bereitstellung einer Übereinstimmung zwischen der Nachfrage nach Leistung und der Verfügbarkeit von Leistung in dem Netz unterstützt.

18. Verfahren zur Steuerung von zumindest einem Elektrolyseur in einem Energienetzwerk mit einer Vielzahl variabler Leistungslasten, dabei ist die Vielzahl variabler Leistungslasten durch ein Elektrizitätsnetz mit einer Vielzahl von Elektrizitätserzeugungsstationen mit zumindest einer erneuerbaren Energiequelle verbunden, dabei beinhaltet das Verfahren ein Anordnen des Elektrolyseurs bei einem Ort auf dem elektrischen Netz, der dazu angepasst ist, Perioden eines über eine Nachfrage hinausgehenden Versorgungsüberschusses oder Instabilität, bei denen eine erneuerbare Energiequelle verbunden ist, zu entlasten und ein Steuern des zumindest einen Elektrolyseurs gemäß Anfragen von dem Netz, um Perioden eines über eine Nachfrage hinausgehenden Versorgungsüberschusses oder Instabilität zu entlasten, durch Absorbieren der andernfalls überschüssigen Verfügbarkeit von Leistung aus der erneuerbaren Energiequelle zur Erzeugung von Wasserstoff, der in einer Erdgaspipeline entladen wird.

19. Verfahren nach Anspruch 18, ferner mit einem derartigen Festlegen der Nachfrage durch individuelle variable Leistungslasten innerhalb einer Gruppe variabler den Elektrolyseur beinhaltenden Leistungslasten, dass eine Summe der individuellen Nachfragen der Gruppe dem Netz Hilfsdienste bereitstellt, und dadurch eine Bereitstellung einer Übereinstimmung zwischen der Nachfrage nach Leistung und der Verfügbarkeit von Leistung in dem Netz unterstützt.

**Revendications**

1. Réseau d'énergie comprenant :

une pluralité de charges de puissance variable comportant au moins un électrolyseur, la pluralité de charges de puissance variable étant reliées à une pluralité de centrales productrices d'électricité par un réseau électrique, dans lequel l'électrolyseur se trouve à un point sur le réseau électrique adapté pour soulager les périodes où l'offre est supérieure à la demande, ou d'instabilité lorsqu'une source d'énergie renouvelable est connectée ; et un contrôleur connecté pour recevoir les demandes en provenance dudit réseau électrique et utilisable pour contrôler ledit au moins un électrolyseur en réponse auxdites demandes pour soulager les périodes où l'offre est supérieure à la demande ou d'instabilité par absorption de puissance de ladite source d'énergie renouvelable pour produire de l'hydrogène qui est déchargé vers une conduite de gaz naturel.

2. Réseau d'énergie selon la revendication 1, comprenant en outre un réseau de données connecté au contrôleur et disponible pour une utilisation par le contrôleur pour approcher une correspondance entre ladite demande et ladite disponibilité de puissance.

3. Réseau d'énergie selon la revendication 2, dans lequel ladite correspondance est basée en partie sur au moins l'une de la détermination duquel d'une pluralité de réglages produit une quantité réduite d'émissions dangereuses par rapport à un autre réglage, et de la détermination duquel d'une pluralité de réglages présente une quantité de coût financier moindre dans le coût marginal requis pour produire de l'électricité.

4. Réseau d'énergie selon l'une quelconque des revendications précédentes, dans lequel le contrôleur comprend un processeur ayant une pluralité d'instructions de programmation utilisables pour faire correspondre ladite demande et ladite disponibilité de puissance.

5. Réseau selon l'une quelconque des revendications précédentes, dans lequel ladite pluralité de centrales productrices d'électricité comporte au moins l'un d'une centrale nucléaire, d'une centrale thermique au charbon, d'une centrale à gaz naturel, d'un parc éolien, d'une centrale solaire, d'un barrage hydroélectrique et d'une pile à hydrogène pour convertir l'hydrogène en électricité.

6. Réseau selon l'une quelconque des revendications précédentes, comprenant au moins une pile à hydrogène pour produire de l'électricité à un premier emplacement et au moins un électrolyseur pour convertir l'électricité à partir d'hydrogène à un second emplacement, ledit réseau étant utilisable pour transférer de l'hydrogène dudit premier emplacement audit second emplacement en convertissant l'hydrogène au premier emplacement en électricité, introduire ladite électricité dans ledit réseau électrique, tirer de l'électricité dudit réseau électrique au second emplacement, et convertir, audit second emplacement, ladite électricité tirée en hydrogène.

7. Réseau selon la revendication 6, dans lequel la conversion d'hydrogène au premier emplacement est réalisée en réponse à une demande d'hydrogène au second emplacement.

8. Réseau selon la revendication 6, dans lequel la conversion d'électricité en hydrogène au second emplacement est réalisée en réponse à une fourniture d'électricité à partir du premier emplacement.

9. Réseau selon l'une quelconque des revendications précédentes, dans lequel la pluralité de charges comprend un ensemble de charges classiques.

10. Réseau selon l'une quelconque des revendications précédentes, dans lequel ladite pluralité de centrales génératrices d'électricité comprend une première centrale ayant un profil de disponibilité qui est sensiblement fixe et une seconde centrale ayant un profil de disponibilité qui est sensiblement aléatoire.

11. Réseau selon la revendication 10, dans lequel la demande dudit au moins un électrolyseur est modulée sur la base de la disponibilité de puissance provenant de ladite seconde centrale.

12. Réseau selon la revendication 10 ou 11, dans lequel ladite première centrale est une centrale nucléaire et ladite seconde centrale est un parc éolien.

13. Réseau selon l'une quelconque des revendications précédentes, dans lequel la demande est basée au moins en partie sur une quantité mesurée d'hydrogène stocké disponible au niveau d'un électrolyseur, ladite quantité mesurée étant basée sur au moins l'un a) d'une pression, d'une température et d'un volume dans des réservoirs de stockage comprimés, et b) d'une pression, d'une température, d'un volume et d'une masse d'hydrure métallique dans un stockage de gaz à hydrure métallique.

14. Réseau selon la revendication 2, ledit réseau comprenant en outre une pile à combustible connectée audit au moins un électrolyseur pour convertir l'hydrogène en électricité pour introduction dans ledit réseau électrique, et dans lequel ladite approche d'une correspondance comporte l'activation de ladite pile à combustible pour distribution d'électricité audit réseau électrique.

15. Réseau selon la revendication 14, dans lequel ladite approche d'une correspondance comporte l'activation dudit au moins un électrolyseur pour absorber la disponibilité provenant desdites centrales électriques.

16. Réseau selon l'une quelconque des revendications précédentes, comprenant au moins une pile à combustible, dans lequel le réseau électrique est stabilisé en absorbant une réduction de la demande par activation d'au moins un électrolyseur, et en absorbant une réduction de disponibilité par activation d'au moins une pile à combustible ou coupure d'un électrolyseur.

17. Réseau selon l'une quelconque des revendications précédentes, dans lequel ledit contrôleur est en outre utilisable pour régler la demande provenant de charges de puissance variable individuelles à l'intérieur d'un groupe de charges de puissance variable, qui comporte ledit électrolyseur, de telle sorte qu'une somme des demandes individuelles du groupe offre des services auxiliaires audit réseau électrique et permet ainsi de fournir une correspondance entre la demande de puissance et la disponibilité de puissance dans ledit réseau électrique.

18. Procédé de contrôle d'au moins un électrolyseur dans un réseau d'énergie comprenant une pluralité de charges de puissance variable, la pluralité de charges de puissance variable étant reliées par un réseau électrique à une pluralité de centrales productrices d'électricité comportant au moins une source d'énergie renouvelable, le procédé comprenant la mise en place de l'électrolyseur à un point sur le réseau électrique adapté pour atténuer des périodes où l'offre est supérieure à la demande ou d'instabilité lorsqu'une source d'énergie renouvelable est connectée et le contrôle dudit au moins un électrolyseur selon les demandes provenant dudit réseau électrique, pour atténuer des périodes où l'offre est supérieure à la demande ou d'instabilité en absorbant la disponibilité de puissance sinon en excès provenant de ladite source d'énergie renouvelable pour générer de l'hydrogène qui est déchargé vers une conduite de gaz naturel.

19. Procédé selon la revendication 18, comprenant en outre le réglage de la demande à partir de charges de puissance variable individuelles à l'intérieur d'un groupe de charges de puissance variable, qui comporte ledit électrolyseur, de telle sorte qu'une somme des demandes individuelles du groupe offre des services auxiliaires audit réseau électrique et permet ainsi de fournir une correspondance entre la demande de puissance et la disponibilité de puissance dans ledit réseau électrique.

Fig. 1

# Demand Profile of Conventional Loads 92

Fig. 2

EP 1 719 235 B1

## Availablity Profile
## Available Power from Nuclear and Wind Power Plants

**Gigawatts** (y-axis: 0, 2, 4, 6, 8, 10, 12)

**Time** (x-axis: 12:00:00 AM, 3:00:00 AM, 6:00:00 AM, 9:00:00 AM, 12:00:00 PM, 3:00:00 PM, 6:00:00 PM, 9:00:00 PM, 12:00:00 AM)

Legend: ■ Wind, ▨ Nuclear

122

Fig. 3

EP 1 719 235 B1

Fig. 4

410 Receive Demand Information → 420 Receive Availability Information → 430 Demand = Availability? — N → 440 Adjust Demand and/or Availability

430 Demand = Availability? — Y

400

Fig. 5

Fig. 6

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6745105 B, Fairlie
- US 5432710 A, Ishimaru
- US 6512966 B, Lof
- WO 0128017 A, Routtenberg
- US 6673479 B, McArthur
- US 20030009265 A, Edwin
- US 6021402 A, Takriti
- WO 03107508 A

**Non-patent literature cited in the description**

- Status of EPRI's hydrogen program. **MEHTA et al.** INTERNATIONAL JOURNAL OF HYDROGEN ENERGY. ELSEVIER SCIENCE PUBLISHERS B.V, 01 January 1981, vol. 6, 625-629